# EUROPEAN PATENT APPLICATION

(11) **EP 4 614 300 A1**
(43) Date of publication of application: **10.09.2025**
(21) Application number: 23900998.8
(22) Date of filing: 28.11.2023
(51) Int. Cl.: G06F 3/04842, G06F 3/0481, G06F 3/16, H04W 4/80, G06F 1/16, G06F 3/14

(54) **WEARABLE DEVICE AND METHOD FOR CHANGING BACKGROUND OBJECT ON BASIS OF SIZE OR NUMBER OF FOREGROUND OBJECTS**

(30) Priority: 05.12.2022 KR 20220167997; 06.01.2023 KR 20230002279
(71) Applicant: Samsung Electronics Co., Ltd., Suwon-si, Gyeonggi-do 16677 (KR)
(72) Inventor: KIM, Kyunghwa, Suwon-si Gyeonggi-do 16677 (KR); KIM, Sunho, Suwon-si Gyeonggi-do 16677 (KR); PARK, Sanghyun, Suwon-si Gyeonggi-do 16677 (KR); SHIN, Giyoung, Suwon-si Gyeonggi-do 16677 (KR); WOO, Minseoung, Suwon-si Gyeonggi-do 16677 (KR); LEE, Hyunjun, Suwon-si Gyeonggi-do 16677 (KR)
(74) Representative: HGF
(86) International application number: PCT/KR2023/019389
(87) International publication number: WO 2024/122979

(57) **Abstract**

A processor of a wearable device, according to one embodiment, may display, on a display, a foreground object superimposed on a background object having a first brightness. On the basis of identifying that at least a portion of the display occupied by the foreground object has increased in size, the processor may change the brightness of the background object to a second brightness that is lower than the first brightness. The present document may relate to a metaverse service for strengthening interconnectivity between a real object and a virtual object. For example, the metaverse service may be provided through a network based on fifth generation (5G) and/or sixth generation (6G).

## Description

### [Technical Field]

The present disclosure relates to a wearable device for changing a background object based on a size or number of foreground objects and a method thereof.

### [Background Art]

In order to provide enhanced user experience, an electronic device providing an augmented reality (AR) service that displays information generated by a computer in connection with an external object in the real-world is being developed. The electronic device may be a wearable device capable of being worn by a user. For example, the electronic device may be AR glasses and/or a head-mounted device (HMD).

### [Disclosure]

### [Technical Solution]

According to an embodiment, a wearable device may comprise a display, a memory for storing instructions, and a processor. The instructions, when executed by the processor, may cause the wearable device to display, overlappingly on a background object having a first brightness, a foreground object on the display. The instructions, when executed by the processor, may cause the wearable device to change a brightness of the background object to a second brightness less than the first brightness, based on identifying that a size of the foreground object is expanded to be greater than a reference size range.

According to an embodiment, a wearable device may comprise a display, memory storing instructions, and a processor. The instructions, when executed by the processor, may cause the wearable device to display, overlappingly on a background object having a first brightness, a foreground object on the display. The instructions, when executed by the processor, may cause the wearable device to, based on identifying that a size of at least a portion of the display occupied by the foreground object has been increased, change a brightness of the background object from the first brightness to a second brightness smaller than the first brightness.

According to an embodiment, a method of a wearable device may comprise displaying, overlappingly on a background object having a first brightness, a foreground object on a display of the wearable device. The method may comprise changing a brightness of the background object to a second brightness less than the first brightness, based on identifying that a size of the foreground object is expanded to be greater than a reference size range.

According to an embodiment, a wearable device may comprise a display, memory storing instructions, and a processor. The instructions, when executed by the processor, may cause the wearable device to display, on the display, a background object having a first brightness and one or more foreground objects superimposed on the background object. The instructions, when executed by the processor, may cause the wearable device to, in a state displaying the background object with the first brightness associated with a number of the one or more foreground objects, identify the number of the foreground objects based on at least one application executed by the processor. The instructions, when executed by the processor, may cause the wearable device to, based on identifying increasing of the number of the one or more foreground objects, change a brightness of the background object to a second brightness smaller than the first brightness.

According to an embodiment, a method of a wearable device may comprise displaying, on a display of the wearable device, a background object having a first brightness and one or more foreground objects superimposed on the background object. The method may comprise, in a state displaying the background object with the first brightness associated with a number of the one or more foreground objects, identifying the number of the foreground objects based on at least one application executed by a processor of the wearable device. The method may comprise, based on identifying increasing of the number of the one or more foreground objects, changing a brightness of the background object to a second brightness smaller than the first brightness.

In an embodiment, a non-transitory computer readable storage medium storing instructions is provided. The instructions, when executed by a processor of a wearable device including a display, may cause the wearable device to display, overlappingly on a background object having a first brightness, a foreground object on the display. The instructions, when executed by the processor, may cause the wearable device to, based on identifying that a size of at least a portion of the display occupied by the foreground object has been increased, change a brightness of the background object from the first brightness to a second brightness smaller than the first brightness.

### [Description of the Drawings]

FIG. 1 illustrates exemplary states in which a wearable device displays overlappingly a foreground object on a background object, according to an embodiment.
FIG. 2 illustrates an example of a block diagram of a wearable device according to an embodiment.
FIG. 3A illustrates an example of a perspective view of a wearable device according to an embodiment.
FIG. 3B illustrates an example of one or more hardware disposed in a wearable device according to an embodiment.
FIGS. 4A to 4B illustrate an example of an exterior of a wearable device according to an embodiment.
FIGS. 5A, 5B, 5C, and 5D illustrate an example of an operation in which a wearable device changes a background object, according to an embodiment.
FIG. 6 illustrates an example of an operation in which a wearable device changes at least a portion of a background object based on a location and/or a size of a foreground object according to an embodiment.
FIG. 7 illustrates an example of a flowchart of a wearable device according to an embodiment.
FIG. 8 illustrates an example diagram with respect to a network environment associated with a metaverse service.

### [Mode for Invention]

Hereinafter, various embodiments of the present document will be described with reference to the accompanying drawings.

The various embodiments of the present document and terms used herein are not intended to limit the technology described in the present document to specific embodiments, and should be understood to include various modifications, equivalents, or substitutes of the corresponding embodiment. In relation to the description of the drawings, a reference numeral may be used for a similar component. A singular expression may include a plural expression unless it is clearly meant differently in the context. In the present document, an expression such as "A or B", "at least one of A and/or B", "A, B or C", or "at least one of A, B and/or C", and the like may include all possible combinations of items listed together. Expressions such as "1st", "2nd", "first" or "second", and the like may modify the corresponding components regardless of order or importance, is only used to distinguish one component from another component, but does not limit the corresponding components. When a (e.g., first) component is referred to as "connected (functionally or communicatively)" or "accessed" to another (e.g., second) component, the component may be directly connected to the other component or may be connected through another component (e.g., a third component).

The term "module" used in the present document may include a unit configured with hardware, software, or firmware, and may be used interchangeably with terms such as logic, logic block, component, or circuit, and the like. The module may be an integrally configured component or a minimum unit or part thereof that performs one or more functions. For example, a module may be configured with an application-specific integrated circuit (ASIC).

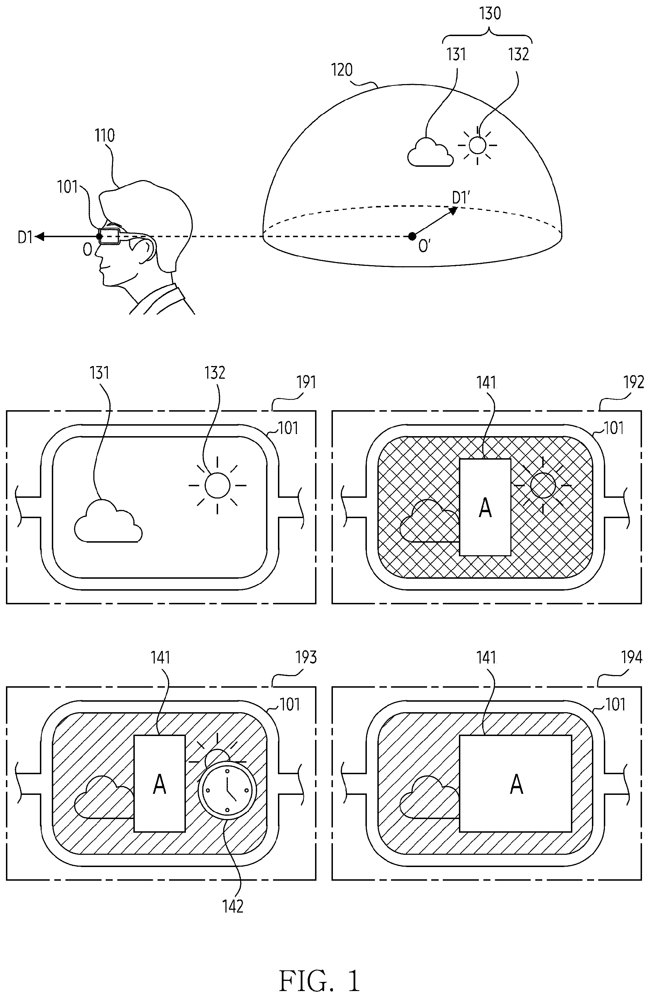

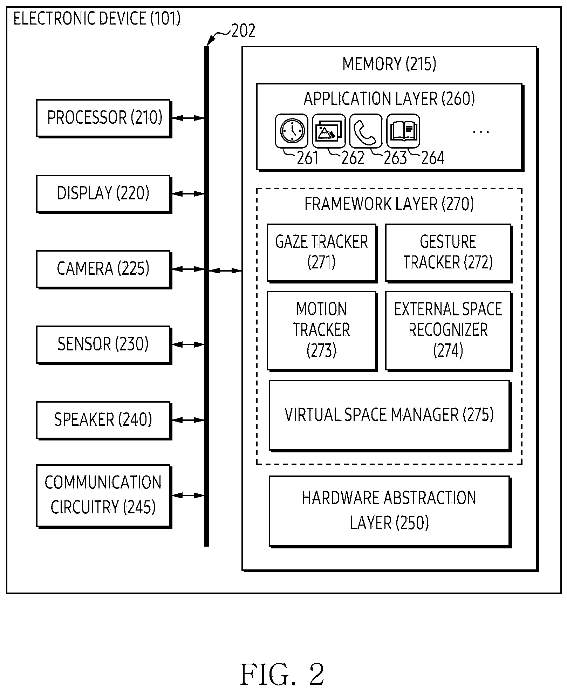

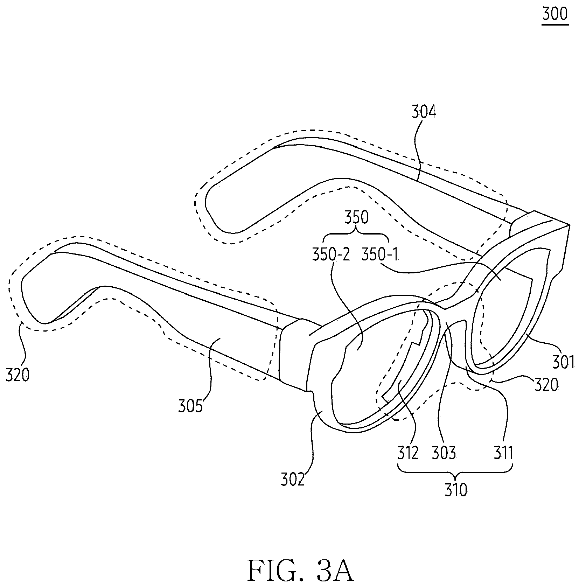

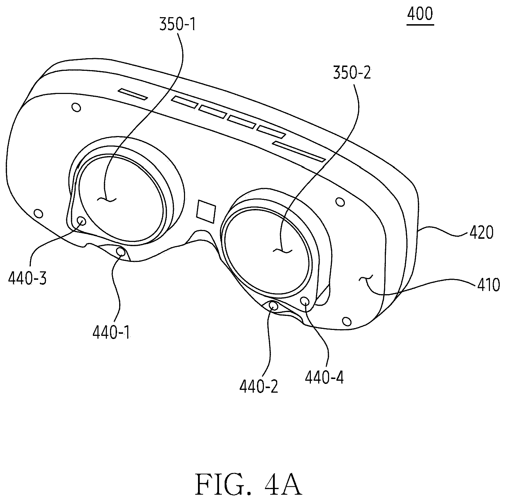

FIG. 1 illustrates exemplary states in which a wearable device 101 displays overlappingly a foreground object on a background object 130, according to an embodiment. In an embodiment, the wearable device 101 may include a head-mounted display (HMD) which is wearable on a user 110's head. Although an exterior of the wearable device 101 having a form of glasses is illustrated, the embodiment is not limited thereto. An example of a structure of the wearable device 101 wearable on the user 110 's head will be described with reference to FIGS. 3A to 3B and/or 4A to 4B. One or more hardware included in the wearable device 101 is exemplarily described with reference to FIG. 2.

According to an embodiment, the wearable device 101 may execute a function related to a video see-through (VST) and/or a virtual reality (VR). Referring to FIG. 1, in a state that the user 110 wears the wearable device 101, the wearable device 101 may include a housing covering the user 110's eye. The wearable device 101 may include a display disposed on a first surface of the housing facing the eye within the state. The wearable device 101 may include a camera disposed on a second surface opposite to the first surface. Using the camera, the wearable device 101 may obtain frames including ambient light. The wearable device 101 may output the frames within a display disposed on the first surface so that the user 110 recognizes the ambient light through the display. A display area of the display disposed on the first surface may be formed by one or more pixels included in the display. The wearable device 101 may cause the user 110 to recognize a virtual object together with a real object recognized by ambient light, by synthesizing the virtual object in frames outputted through the display.

According to an embodiment, the wearable device 101 may execute a function related to augmented reality (AR) and/or mixed reality (MR). In an embodiment of FIG. 1, in a state that the user 110 wears the wearable device 101, the wearable device 101 may include at least one lens disposed adjacent to the user 110's eyes. The wearable device 101 may combine ambient light passing through the lens with light emitted from a display of the wearable device 101. A display area of the display may be formed within a lens through which ambient light passes. Since the wearable device 101 combines the ambient light and the light emitted from the display, the user 110 may see an image in which a real object recognized by the ambient light and a virtual object formed by the light emitted from the display are mixed.

According to an embodiment, the wearable device 101 may provide the user 110 with a user experience related to AR, MR, VR, and/or VST, based on a virtual space 120. The wearable device 101 may selectively output a portion of the virtual space 120, based on motion of the wearable device 101 moved by the user 110 wearing the wearable device 101. For example, an origin O' of the virtual space 120 may match a point O of the wearable device 101, and a direction D1 of the wearable device 101 may match a direction D1' of the virtual space 120. The wearable device 101 may change the point O' and/or the direction D1' within the virtual space 120, based on motion of the wearable device 101. Based on the change in the point O' and/or direction D1', the wearable device 101 may change a portion of the virtual space 120 displayed through a display of the wearable device 101. Hereinafter, a view angle of the virtual space 120 may mean a portion of the virtual space 120 displayed by the wearable device 101. The view angle may be formed in a form of a cone and/or a quadrangular cone having a point O' as a vertex and extending toward the direction D1', within the virtual space 120.

According to an embodiment, the wearable device 101 may display background object 130. The background object 130 may be displayed to the user 110 to represent a feature (e.g., a feature that provides a user experience for VR) of the wearable device 101. In an embodiment, the background object 130 may be referred to as an interactive wall paper and/or space paper. The background object 130 may include a virtual object disposed in the virtual space 120 and/or a group of one or more virtual objects. Using the background object 130, the wearable device 101 may provide, to the user 110 wearing the wearable device 101, a user experience related to a virtual world surrounding the user 110. The wearable device 101 may change at least a portion of the background object 130 based on motion of the user 110. The wearable device 101 may arrange the background object 130 within the virtual space 120, based on an execution of an application (e.g., a system software included in an operating system). Hereinafter, an application executed by the wearable device 101 for visualization of the background object 130 may be referred to as a background application (or background process) and/or a launcher application.

Referring to FIG. 1, according to an embodiment, exemplary states 191, 192, 193, and 194 in which the wearable device 101 displays at least a portion of the virtual space 120 to the user 110 are exemplarily illustrated. One or more programs executed by the wearable device 101 to display at least a portion of the virtual space 120 are described with reference to FIG. 2. In the state 191, the wearable device 101 may display virtual objects 131 and 132 included in the background object 130. In an embodiment in which the wearable device 101 generates the background object 130 using weather information (e.g., weather information identified by a global positioning system (GPS) coordinate of the wearable device 101), the wearable device 101 may display virtual objects 131 and 132 for representing the weather information to the user 110. Although the virtual objects 131 and 132 having cloud and sun forms are exemplarily illustrated, the embodiment is not limited thereto. For example, the wearable device 101 may display the background object 130 including colors and/or virtual objects corresponding to different time intervals (e.g., time intervals matched to each of morning, afternoon, day and/or night).

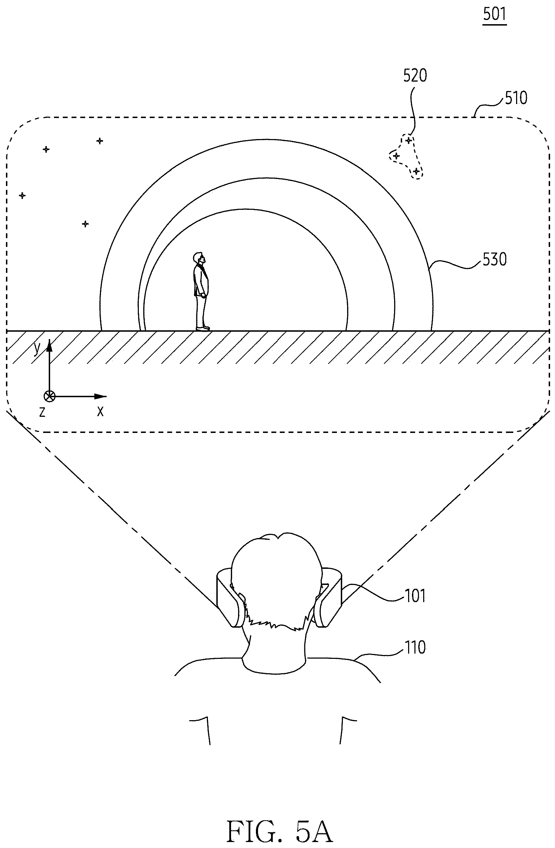

Referring to FIG. 1, different states 192, 193, and 194 in which the wearable device 101 displays one or more foreground objects together with the background object 130 are exemplarily illustrated. Referring to the states 191 and the states 192, 193, and 194, the wearable device 101 may change the background object 130, based on displaying at least one foreground object on the background object 130. For example, the wearable device 101 may change at least one attribute (e.g., brightness, chroma, particle density, particle speed, and/or vignetting effect) used to display the background object 130. Based on the at least one attribute, an exemplary structure of the background object 130 displayed by the wearable device 101 will be described with reference to FIG. 5A. While the wearable device 101 changes the at least one attribute related to the background object 130, the wearable device 101 may not change or maintain an attribute used to display at least one foreground object. For example, the wearable device 101 may selectively change the background object 130, based on displaying at least one foreground object. Based on selectively changing in the background object 130, the wearable device 101 may emphasize at least one foreground object.

In an embodiment, a foreground object displayed by the wearable device 101 may include a screen (e.g., a window such as activity) and/or a widget (or gadget) provided from an application executed by the wearable device 101. The wearable device 101 may identify at least one foreground object to be disposed in the virtual space 120, based on an execution of an application. For example, the wearable device 101 may add a first foreground object 141 having a form of a window to the virtual space 120, based on an execution of an application. In the state 192 of FIG. 1, the wearable device 101 may display the first foreground object 141 overlapping the background object 130 to the user 110, based on a view angle of the virtual space 120 formed toward the first foreground object 141.

According to an embodiment, the wearable device 101 may change a brightness of the background object 130, based on a size and/or number of one or more foreground objects superimposed on the background object 130 in the display. Referring to the states 191 and 192 of FIG. 1, the wearable device 101 may change the brightness of the background object 130 from a first brightness (e.g., 100%) of the state 191 to a second brightness (e.g., 80%) less than the first brightness, based on displaying the first foreground object 131. The second brightness may be related to a size of the first foreground object 131 displayed through a display (or the extent in which the background object 130 is covered). The second brightness may be set independently of an attribute used by the wearable device 101 to display the first foreground object 141. For example, while switching from the state 191 of FIG. 1 to the state 192, the wearable device 101 may display the first foreground object 141 at another brightness different from the second brightness, together with changing the brightness of the background object 130 from the first brightness to the second brightness.

Referring to the states 192 and 193 of FIG. 1, according to an embodiment, the wearable device 101 may change the brightness of the background object 130, based on the number of foreground objects displayed through the display. For example, the brightness of the background object 130 may be inversely proportional to the number of foreground objects. In the state 192 in FIG. 1 displaying the first foreground object 141, the wearable device 101 may switch to the state 193, in response to occurrence of an event for displaying a second foreground object 142 distinguished from the first foreground object 141. Although the exemplary state 193 in which the wearable device 101 displays the second foreground object 142 which is a widget having a form of a watch based on an execution of a designated program such as a watch application is illustrated, the embodiment is not limited thereto.

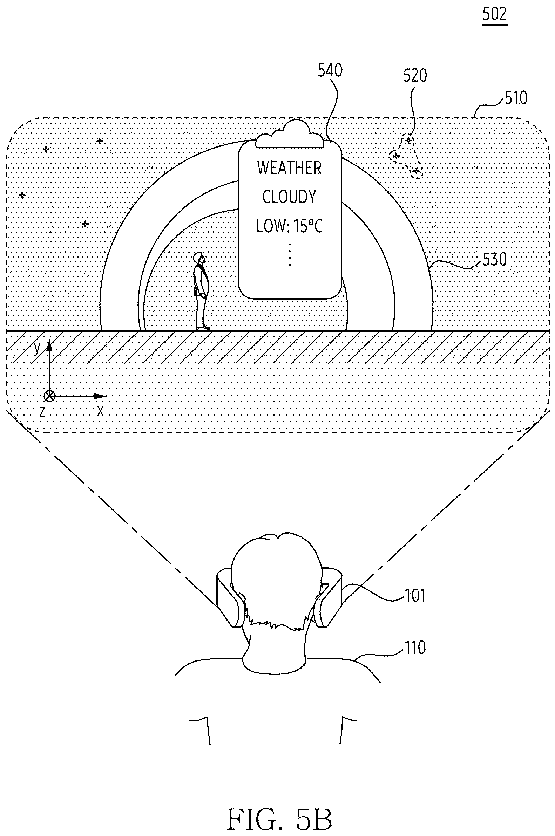

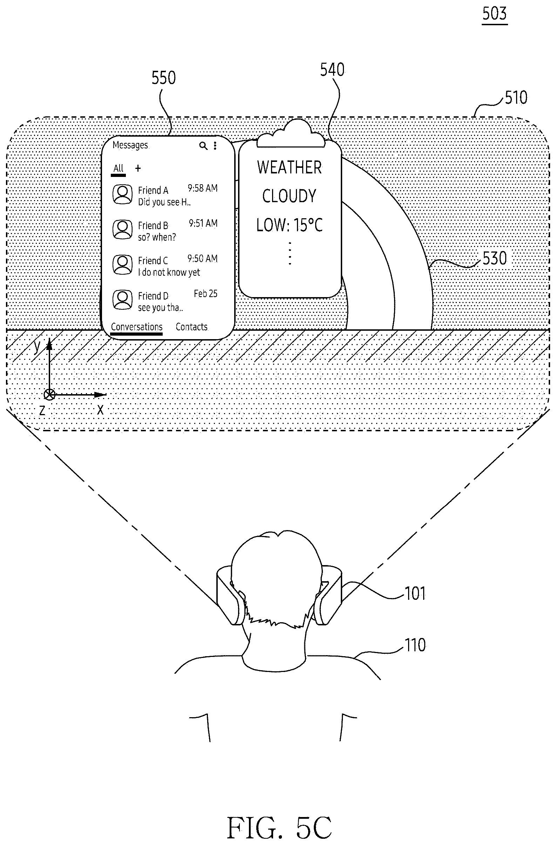

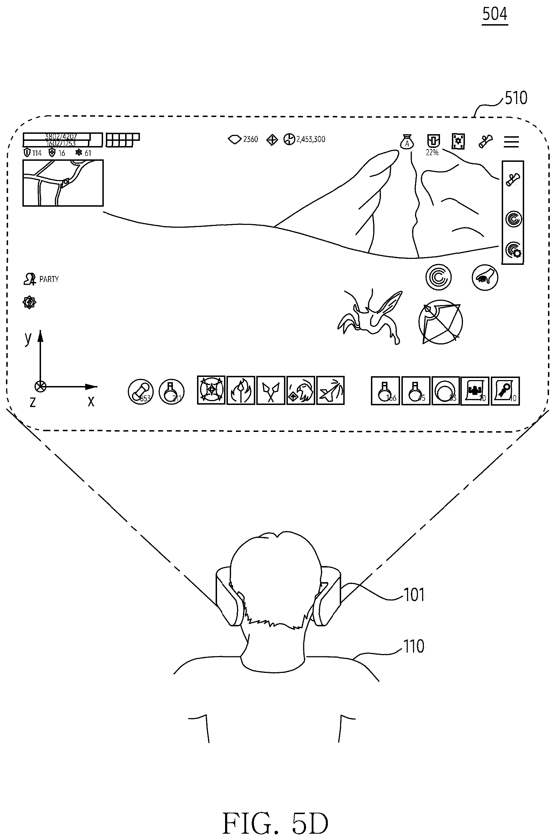

Referring to FIG. 1, while switching from the state 192 to the state 193, the wearable device 101 may identify that the number of the foreground objects superimposed on the background object 130 is increased. For example, as the state 192 of displaying one foreground object (e.g., the first foreground object 141) is switched to the state 193 of displaying two foreground objects (e.g., the first foreground object 141 and the second foreground object 142), the wearable device 101 may adjust the brightness of the background object 130 based on a change in the number of the foreground objects. In an embodiment, the wearable device 101 may change the brightness of the background object 130 using the number of the foreground objects. For example, the brightness of the background object 130 may be inversely proportional to the number of the foreground objects. While switching from the state 192 displaying the background object 130 to the state 193, the wearable device 101 may change the brightness of the background object 130 from the second brightness to a third brightness less than the second brightness. The third brightness may be a preset brightness matched with the number (e.g., two) of foreground objects displayed by the wearable device 101 in the state 193. An example of an operation in which the wearable device 101 changes the brightness of the background object 130 based on a change in the number of foreground objects included in the display according to an embodiment will be described with reference to FIGS. 5A, 5B, 5C, and 5D.

Referring to the states 192 and 194 of FIG. 1, according to an embodiment, the wearable device 101 may change the brightness of the background object 130, based on a size of the foreground object displayed through the display. For example, the brightness of background object 130 may be inversely proportional to the size in which one or more foreground objects are displayed through the display. In the state 192 of FIG. 1 displaying the first foreground object 141 of a first size, the wearable device 101 may switch to the state 194, in response to occurrence of an event for increasing the size of the first foreground object 141. In the state 194, the wearable device 101 may display the first foreground object 141 with a second size greater than the first size.

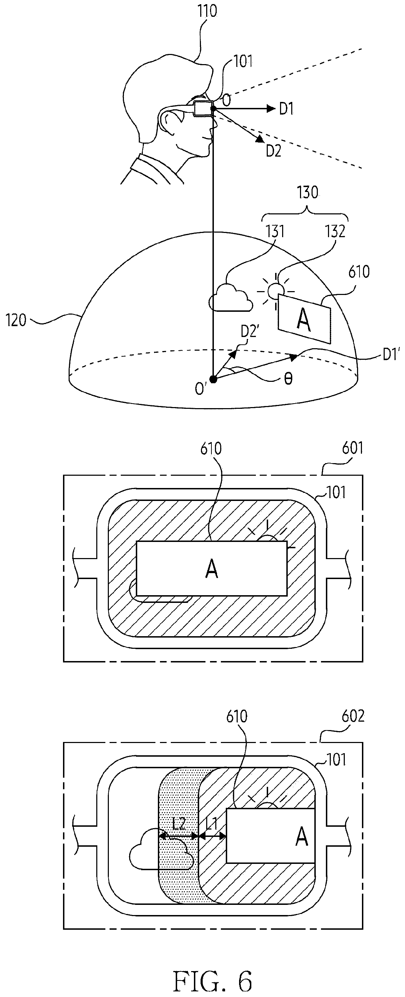

Referring to FIG. 1, while switching from the state 192 to the state 194, the wearable device 101 may identify that the size of the first foreground object 141 is increased. While switching from the state 192 to the state 194, the wearable device 101 may adjust a brightness of the first foreground object 141, based on a change in the size of the first foreground object 141. In an embodiment, the wearable device 101 may change a brightness of the background object 130 based on a size of a foreground object. The brightness of the background object 130 may be inversely proportional to extent occupied by one or more foreground objects in the display and/or a ratio of the extent. While switching from the state 192 displaying the background object 130 to the state 193, the wearable device 101 may change the brightness of the background object 130 from the second brightness to a fourth brightness less than the second brightness. The fourth brightness may be set independently of the third brightness of the state 193. The fourth brightness may be a preset brightness matched to the size of the first foreground object 141 displayed by the wearable device 101 in the state 194. An example of an operation in which the wearable device 101 changes the brightness of the background object 130 based on a change in the size of the foreground object included in the display according to an embodiment will be described with reference to FIG. 6.

According to an embodiment, the wearable device 101 may play an audio signal based on an execution of an application (e.g., a background application) for displaying the background object 130. While playing a first audio signal corresponding to the background object 130, the wearable device 101 may change an attribute (e.g., a sound volume, a sound pitch and/or a sound speed) related to the first audio signal, based on identifying a second audio signal corresponding to at least one foreground object. The wearable device 101 may reduce the volume of the first audio signal to cause the user 110 to focus on the second audio signal. Reducing the volume of the first audio signal by the wearable device 101 may be performed in a state that the volume of the second audio signal is maintained. For example, as the number of foreground objects displayed to the user 110 is increased (e.g., sequential switching of states 191, 192, and 193), the wearable device 101 may gradually reduce the volume of the first audio signal. For example, as the size of the foreground object displayed to the user 110 is increased (e.g., sequential switching of states 191, 192, and 194), the wearable device 101 may gradually reduce the volume of the first audio signal.

Although a case in which the number and/or size of foreground objects is increased from the state 191 in which only the background object 130 is displayed is exemplarily described, the embodiment is not limited thereto. According to an embodiment, the wearable device 101 may increase a brightness of the background object 130 and/or a volume of an audio signal corresponding to the background object 130 based on the reduction in the number and/or size of the foreground object.

As described above, according to an embodiment, the wearable device 101 may change an attribute to display the background object 130 to maintain the user 110's focus on at least one foreground object (e.g., the first foreground object 141 and/or the second foreground object 142). The wearable device 101 may change the attribute based on an expansion and/or a reduction of the first foreground object 141, such as the states 192 and 194. The wearable device 101 may change the attribute based on a change in the number of foreground objects displayed through the display, such as the states 192 and 193. The attribute for displaying the background object 130 may include an attribute that is collectively applied to at least one virtual object classified as the background object 130, such as brightness and/or chroma. The attribute may include an attribute for controlling the number and/or movement of virtual objects included in the background object 130, such as a particle density and/or a particle speed. When outputting an audio signal corresponding to the background object 130 (e.g., an audio signal synchronized with the background object 130), the wearable device 101 may adjust an attribute for playing the audio signal similarly to changing the attribute for displaying the background object 130. The attribute for playing the audio signal may include a sound volume, a sound pitch, and/or a sound speed. For example, the wearable device 101 may change at least one attribute related to the background object 130, based on the user 110's motion on the wearable device 101 (e.g., motion to control and/or change the foreground object).

Hereinafter, an example of one or more hardware included in the wearable device 101 and/or a software application executed by the wearable device 101 according to an embodiment will be described with reference to FIG. 2.

FIG. 2 illustrates an example of a block diagram of a wearable device 101 according to an embodiment. The wearable device 101 of FIG. 2 may include the wearable device 101 of FIG. 1.

According to an embodiment, the wearable device 101 may include at least one of a processor 210, memory 215, a display 220, a camera 225, a sensor 230, a speaker 240, or communication circuitry 245. The processor 210, the memory 215, the display 220, the camera 225, the sensor 230, the speaker 240, and the communication circuitry 245 may be electronically and/or operably coupled with each other by an electronic component such as a communication bus 202. Hereinafter, hardware being operably coupled may mean that a direct connection or an indirect connection between the hardware is established by wire or wirelessly so that a second hardware is controlled by a first hardware among the hardware. Although illustrated based on different blocks, embodiments are not limited thereto, and a portion (e.g., the processor 210, the memory 215, and the communication circuitry 245) of the hardware of FIG. 2 may be included in a single integrated circuit such as a system on a chip (SoC). A type and/or number of hardware included in the wearable device 101 is not limited as illustrated in FIG. 2. For example, the wearable device 101 may include only some of the hardware components illustrated in FIG. 2.

In an embodiment, the processor 210 of the wearable device 101 may include hardware for processing data based on one or more instructions. For example, the hardware for processing data may include an arithmetic and logic unit (ALU), a floating point unit (FPU), a field programmable gate array (FPGA), a central processing unit (CPU), and/or an application processor (AP). The processor 210 may have a structure of a single-core processor, or may have a structure of a multi-core processor such as a dual core, a quad core, or a hexa core.

In an embodiment, the memory 215 of the wearable device 101 may include hardware components for storing data and/or instructions inputted and/or outputted to the processor 210 of the wearable device 101. For example, the memory 215 may include volatile memory, such as random-access memory (RAM), and/or non-volatile memory, such as read-only memory (ROM). For example, the volatile memory may include at least one of a dynamic RAM (DRAM), a static RAM (SRAM), a Cache RAM, and a pseudo SRAM (PSRAM). For example, the nonvolatile memory may include at least one of a programmable ROM (PROM), an erasable PROM (EPROM), an electrically erasable PROM (EEPROM), a flash memory, a hard disk, a compact disc, a solid state drive (SSD), and an embedded multi media card (eMMC).

In an embodiment, the display 220 of the wearable device 101 may output visualized information (e.g., screens of FIGS. 1, 5A, 5B, 5C, 5D, and 6) to a user (e.g., the user 110 of FIG. 1). For example, the display 220 may be controlled by the processor 210 including a circuit such as a graphic processing unit (GPU) and output the visualized information to the user. The display 220 may include a flat panel display (FPD) and/or electronic paper. The FPD may include a liquid crystal display (LCD), a plasma display panel (PDP), and/or one or more light emitting diodes (LEDs). The LED may include organic LED (OLED). The display 220 of FIG. 2 may include at least one display 350, which will be described later with reference to FIGS. 3A to 3B and/or FIGS. 4A to 4B.

In an embodiment, the camera 225 of the wearable device 101 may include one or more optical sensors (e.g., a charged coupled device (CCD) sensor, a complementary metal oxide semiconductor (CMOS) sensor) that generate an electrical signal indicating a color and/or a brightness of light. A plurality of optical sensors included in the camera 225 may be arranged in a form of a 2-dimensional array. The camera 225 may substantially simultaneously obtain electrical signals of each of the plurality of optical sensors and generate 2-dimensional frame data corresponding to light reaching the optical sensors of the 2-dimensional array. For example, photograph data captured using the camera 225 may mean a 2-dimensional frame data obtained from the camera 225. For example, video data captured using the camera 225 may mean a sequence of a plurality of 2-dimensional frame data, obtained from the camera 225 according to a frame rate. The camera 225 may be disposed toward a direction in which the camera 225 receives light, and may further include a flash light for outputting light toward the direction. Although the camera 225 is illustrated based on a single block, the number of cameras 225 included in the wearable device 101 is not limited to the embodiment. The wearable device 101 may include one or more cameras, such as one or more cameras 340, which will be described later with reference to FIGS. 3A to 3B and/or FIGS. 4A to 4B.

According to an embodiment, the sensor 230 of the wearable device 101 may generate electronic information capable of being processed by the processor 210 and/or the memory 215 of the wearable device 101 from non-electronic information related to the wearable device 101. The information may be referred to as sensor data. The sensor 230 may include a global positioning system (GPS) sensor for detecting a geographic location of the wearable device 101, an image sensor, an ambient light sensor, and/or a time-of-flight (ToF) sensor, and an inertial measurement unit (IMU) for detecting physical motion of the wearable device 101.

In an embodiment, the speaker 240 of the wearable device 101 may be controlled by the processor 210 to output an audio signal. When outputting a plurality of audio signals through the speaker 240, the processor 210 may mix the plurality of audio signals by using an attribute corresponding to each of the plurality of audio signals. The processor (210) may manage an attribute corresponding to an audio signal based on a sound path. The attribute may include a sound volume which is a parameter for controlling the amplitude of the audio signal, a sound pitch for controlling a frequency of the audio signal, and/or a sound speed for controlling a speed at which the audio signal is played. Although illustrated as one block, the wearable device 101 may include a plurality of speakers.

In an embodiment, the communication circuitry 245 of the wearable device 101 may include hardware components for supporting transmission and/or reception of an electrical signal between the wearable device 101 and one or more external electronic devices. For example, the communication circuitry 245 may include at least one of a modem, an antenna, and an optic/electronic (O/E) converter. The communication circuitry 245 may support transmission and/or reception of an electrical signal based on various types of protocols, such as Ethernet, a local area network (LAN), a wide area network (WAN), wireless fidelity (WiFi), Bluetooth, Bluetooth low energy (BLE), ZigBee, long term evolution (LTE), 5G new radio (NR), and/or 6G.

Although not illustrated, according to an embodiment, the wearable device 101 may include an output means for outputting information in a form other than a visualized form. For example, the wearable device 101 may include a motor for providing haptic feedback based on vibration.

Referring to an embodiment of FIG. 2, in the memory 215 of the wearable device 101, one or more instructions (or commands) indicating a calculation and/or an operation to be performed by the processor 210 of the wearable device 101 on data may be stored. A set of one or more instructions may be referred to as a program, a firmware, an operating system, a process, a routine, a sub-routine and/or an application. Hereinafter, an application being installed in an electronic device (e.g., the wearable device 101) may mean that one or more instructions provided in the form of an application are stored in the memory 215, and that the one or more applications are stored in an executable format (e.g., a file having a preset extension by an operating system of the wearable device 101) by the processor of the electronic device.

Referring to FIG. 2, programs installed in the wearable device 101 may be classified into any one of different layers, including an application layer 260, a framework layer 270, and/or a hardware abstraction layer (HAL) 250, based on a target. For example, programs (e.g., driver) designed to target the hardware (e.g., the display 220, the camera 225, the sensor 230, and/or the speaker 240) of the wearable device 101 may be classified into the hardware abstraction layer 250. For example, programs (e.g., a gaze tracker 271, a gesture tracker 272, a motion tracker 273, an external space recognizer 274, and/or a virtual space manager 275) designed to target at least one of the hardware abstraction layer 250 and/or the application layer 260 may be classified into the framework layer 270. The programs classified into the framework layer 270 may provide an application programming interface (API) that is executable based on another program.

Referring to FIG. 2, a program designed for a user (e.g., the user 110 of FIG. 1) controlling the wearable device 101 may be classified into the application layer 260. For example, a program classified into the application layer 260 may include at least one of a clock application 261 for outputting information about time (e.g., current time and/or alarm), a gallery application 262 for viewing media content stored in the memory 215, a phone application 263 for a call connection, and/or a word processor application 264 for viewing and/or editing a document. The embodiments are not limited thereto. For example, a program classified as the application layer 260 may cause an execution of a function supported by programs classified into the framework layer 270, by calling an API.

Referring to FIG. 2, the wearable device 101 may process information related to a gaze of a user wearing the wearable device 101, based on an execution of the gaze tracker 271 in the framework layer 270. For example, the wearable device 101 may obtain an image including the user's eyes from the camera 225. Based on a position and/or a direction of pupil included in the image, the wearable device 101 may identify a direction of the user's gaze.

Referring to FIG. 2, the wearable device 101 may identify motion of a designated body part including a hand, based on an execution of the gesture tracker 272 in the framework layer 270. For example, the wearable device 101 may obtain frames including the body part from the camera 225. Based on the motion and/or posture of the designated body part indicated by the frames, the wearable device 101 may identify a gesture performed by the designated body part.

Referring to FIG. 2, the wearable device 101 may identify motion of the wearable device 101 based on an execution of the motion tracker 273 in the framework layer 270. In a state that the wearable device 101 is worn by the user, the motion of the wearable device 101 may be related to motion of the user's head. For example, the wearable device 101 may identify a direction of the wearable device 101 that substantially matches a direction of the head, as in the direction D1 of FIG. 1. The wearable device 101 may identify the motion of the wearable device 101 based on sensor data of the sensor 230 including the IMU.

Referring to FIG. 2, the wearable device 101 may obtain information on an external space including the wearable device 101 or adjacent to the wearable device 101, based on an execution of the external space recognizer 274 in the framework layer 270. The wearable device 101 may obtain the information using the camera 225 and/or the sensor 230. Referring to FIG. 2, in a state that the external space recognizer 274 is executed, the wearable device 101 may identify a virtual space mapped to the external space, based on the information obtained based on the external space recognizer 274. Based on the execution of the external space recognizer 274, the wearable device 101 may identify a location and/or a direction of the wearable device 101 within the external space. For example, based on the execution of the external space recognizer 274 and/or the motion tracker 273, the wearable device 101 may perform a simultaneous localization and mapping (SLAM) to recognize the recognition of the external space and a location of the wearable device 101 within the external space.

According to an embodiment, the wearable device 101 may display a virtual space (e.g., the virtual space 120 of FIG. 1) to be displayed through the display 220, based on an execution of the virtual space manager 275. In a state that the virtual space manager 275 is executed, the wearable device 101 may dispose a background object (e.g., the background object 130 of FIG. 1) in the virtual space. In a state that the virtual space manager 275 is executed, the wearable device 101 may dispose a foreground object (e.g., the first foreground object 141 and/or the second foreground object 142 of FIG. 1) provided from an application classified into the application layer 260, in the virtual space.

In an embodiment, based on the execution of the virtual space manager 275, the wearable device 101 may render at least a portion of a virtual space on the display 220. Based on the rendering, the wearable device 101 may display the background object and/or the foreground object disposed in the virtual space. The wearable device 101 may select a view angle in the virtual space, based on a direction of the wearable device 101 identified based on the motion tracker 273. Based on the selected view angle, the wearable device 101 may perform rendering on at least a portion of the virtual space. For example, the wearable device 101 may render at least a portion of a background object included in the view angle, based on at least one attribute corresponding to the background object. The at least one attribute may include a brightness, a chroma, a particle density and/or a particle speed. The wearable device 101 may adaptively change the at least one attribute used for rendering a background object, based on a number and/or a size of foreground objects displayed through the display 220. The wearable device 101 may synchronize the at least one attribute used for rendering a background object with at least one attribute, used to control the speaker 240 and corresponding to the background object.

For example, the wearable device 101 may overlappingly display a foreground object on a background object having a first brightness in the display 220, based on the execution of the virtual space manager 275. The wearable device 101 may output an audio signal of a first volume through the speaker 240, based on execution of a process corresponding to a background object. The first brightness and the first volume may be included in a data set selected based on a size and/or number of foreground objects among designated data sets. An example of the designated data sets is described with reference to Tables 1 and 2 to be described below. According to an embodiment, the wearable device 101 may change a brightness of the background object to a second brightness less than the first brightness, based on identifying that a size of the foreground object is expanded to be greater than a reference size range. Based on the expansion of the size of the foreground object, the wearable device 101 may reduce a volume of the audio signal corresponding to a background object to a second volume lower than the first volume. Similarly, the wearable device 101 may change a brightness of the background object to a third brightness greater than the first brightness, based on identifying that a size of the foreground object is reduced to be less than the reference size range. Based on the reduction in the size of the foreground object, the wearable device 101 may change the volume of the audio signal corresponding to the background object to a third volume greater than the first volume. The reference size range may be related to a data set including the first brightness and the first volume. For example, each of the designated data sets may include a condition for applying an attribute included in the data set to a background object. The condition may be related to the size and/or number of foreground objects displayed through the display 220.

Similar to the operation of changing a brightness of a background object based on a change in a size of a foreground object, the wearable device 101 may change a brightness of a background object based on the number of foreground objects displayed through the display 220. For example, in a state of outputting a background object having the first brightness and an audio signal corresponding to the background object with a first volume, the wearable device 101 may overlappingly display one or more foreground objects with the background object. The first brightness and/or the first volume may be set by a data set corresponding to the number of foreground objects displayed through the display 220 in the state. The wearable device 101 may identify the number of the one or more foreground objects based on at least one application. The wearable device 101 may change the brightness of the background object to a second brightness less than the first brightness, based on identifying that the number of the one or more foreground objects is increased. Based on the increase in the number of the one or more foreground objects, the wearable device 101 may reduce a volume of the audio signal corresponding to the background object to a second volume lower than the first volume. The wearable device 101 may change the brightness of the background object to a third brightness greater than the first brightness, based on identifying that the number of the one or more foreground objects is reduced. Based on the reduction in the number of the one or more foreground objects, the wearable device 101 may increase the volume of the audio signal corresponding to the background object to a third volume greater than the first volume.

As described above, according to an embodiment, the wearable device 101 may add and/or remove at least one foreground object in a virtual space, based on at least one application executed by the processor 210. Based on a direction of the wearable device 101 tracked by the motion tracker 273, while displaying at least a portion of the virtual space on the display 220, the wearable device 101 may change the at least portion displayed on the display 220. Changing the at least a portion of the virtual space by the wearable device 101 may be related to parallel movement and/or rotational movement of a view angle formed in the virtual space. The wearable device 101 may display an image in which a background object surrounds the at least one foreground object on the display 220, by using the background object included in the virtual space together with at least one foreground object. The wearable device 101 may change an attribute used for rendering the background object, based on a size and/or number of the at least one foreground object displayed through the display 220. For example, the attribute may be changed to emphasize the at least one foreground object included in the display 220. For example, in order to emphasize the at least one foreground object, the wearable device 101 may maintain an attribute (e.g., brightness) used for rendering the at least one foreground object, independently of changing the attribute used for rendering the background object.

Hereinafter, an example of a form factor of the wearable device 101 according to an embodiment will be described using FIGS. 3A to 3B and/or 4A to 4B.

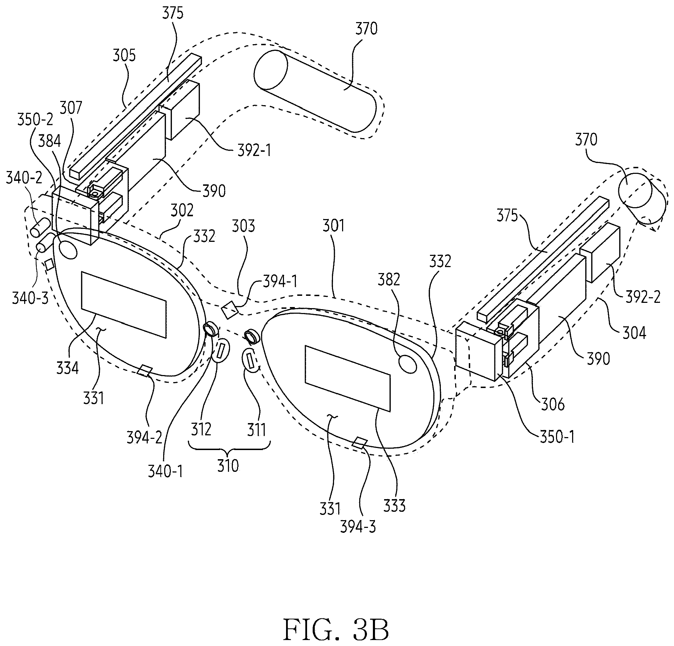

FIG. 3A illustrates an example of a perspective view of a wearable device according to an embodiment. FIG. 3B illustrates an example of one or more hardware disposed in the wearable device 300 according to an embodiment. The wearable device 101 of FIGS. 1 and 2 may include a wearable device 300 of FIGS. 3A to 3B. As shown in FIG. 3A, according to an embodiment, the wearable device 300 may include at least one display 350 and a frame supporting the at least one display 350.

According to an embodiment, the wearable device 300 may be wearable on a portion of the user's body. The wearable device 300 may provide augmented reality (AR), virtual reality (VR), or mixed reality (MR) combining the augmented reality and the virtual reality to a user wearing the wearable device 300. For example, the wearable device 300 may output a virtual reality image through at least one display 350, in response to a user's preset gesture obtained through a motion recognition camera 340-2 of FIG. 3B.

According to an embodiment, the at least one display 350 in the wearable device 300 may provide visual information to a user. The at least one display 350 may include the display 220 of FIG. 2. For example, the at least one display 350 may include a transparent or translucent lens. The at least one display 350 may include a first display 350-1 and/or a second display 350-2 spaced apart from the first display 350-1. For example, the first display 350-1 and the second display 350-2 may be disposed at positions corresponding to the user's left and right eyes, respectively.

Referring to FIG. 3B, the at least one display 350 may form a display area on the lens to provide a user wearing the wearable device 300 with visual information included in ambient light passing through the lens and other visual information distinct from the visual information. The lens may be formed based on at least one of a fresnel lens, a pancake lens, or a multi-channel lens. The display area formed by the at least one display 350 may be formed on the second surface 332 of the first surface 331 and the second surface 332 of the lens. When the user wears the wearable device 300, ambient light may be transmitted to the user by being incident on the first surface 331 and being penetrated through the second surface 332. For another example, the at least one display 350 may display a virtual reality image to be combined with a reality screen transmitted through ambient light. The virtual reality image outputted from the at least one display 350 may be transmitted to eyes of the user, through one or more hardware (e.g., optical devices 382 and 384, and/or at least one waveguides 333 and 334) included in the wearable device 300.

According to an embodiment, the wearable device 300 may include waveguides 333 and 334 that transmit light transmitted from the at least one display 350 and relayed by the at least one optical device 382 and 384 by diffracting to the user. The waveguides 333 and 334 may be formed based on at least one of glass, plastic, or polymer. A nano pattern may be formed on at least a portion of the outside or inside of the waveguides 333 and 334. The nano pattern may be formed based on a grating structure having a polygonal or curved shape. Light incident to an end of the waveguides 333 and 334 may be propagated to another end of the waveguides 333 and 334 by the nano pattern. The waveguides 333 and 334 may include at least one of at least one diffraction element (e.g., a diffractive optical element (DOE), a holographic optical element (HOE)), and a reflection element (e.g., a reflection mirror). For example, the waveguides 333 and 334 may be disposed in the wearable device 300 to guide a screen displayed by the at least one display 350 to the user's eyes. For example, the screen may be transmitted to the user's eyes through total internal reflection (TIR) generated in the waveguides 333 and 334.

According to an embodiment, the wearable device 300 may analyze an object included in a real image collected through a photographing camera 340-1, combine with a virtual object corresponding to an object that become a subject of augmented reality provision among the analyzed object, and display on the at least one display 350. The virtual object may include at least one of text and images for various information associated with the object included in the real image. The wearable device 300 may analyze the object based on a multi-camera such as a stereo camera. For the object analysis, the wearable device 300 may execute time-of-flight (ToF) and/or simultaneous localization and mapping (SLAM) supported by the multi-camera. The user wearing the wearable device 300 may watch an image displayed on the at least one display 350.

According to an embodiment, a frame may be configured with a physical structure in which the wearable device 300 may be worn on the user's body. According to an embodiment, the frame may be configured so that when the user wears the wearable device 300, the first display 350-1 and the second display 350-2 may be positioned corresponding to the user's left and right eyes. The frame may support the at least one display 350. For example, the frame may support the first display 350-1 and the second display 350-2 to be positioned at positions corresponding to the user's left and right eyes.

Referring to FIG. 3A, according to an embodiment, the frame may include an area 320 at least partially in contact with the portion of the user's body in case that the user wears the wearable device 300. For example, the area 320 of the frame in contact with the portion of the user's body may include an area in contact with a portion of the user's nose, a portion of the user's ear, and a portion of the side of the user's face that the wearable device 300 contacts. According to an embodiment, the frame may include a nose pad 310 that is contacted on the portion of the user's body. When the wearable device 300 is worn by the user, the nose pad 310 may be contacted on the portion of the user's nose. The frame may include a first temple 304 and a second temple 305, which are contacted on another portion of the user's body that is distinct from the portion of the user's body.

According to an embodiment, the frame may include a first rim 301 surrounding at least a portion of the first display 350-1, a second rim 302 surrounding at least a portion of the second display 350-2, a bridge 303 disposed between the first rim 301 and the second rim 302, a first pad 311 disposed along a portion of the edge of the first rim 301 from one end of the bridge 303, a second pad 312 disposed along a portion of the edge of the second rim 302 from the other end of the bridge 303, the first temple 304 extending from the first rim 301 and fixed to a portion of the wearer's ear, and the second temple 305 extending from the second rim 302 and fixed to a portion of the ear opposite to the ear. The first pad 311 and the second pad 312 may be in contact with the portion of the user's nose, and the first temple 304 and the second temple 305 may be in contact with a portion of the user's face and the portion of the user's ear. The temples 304 and 305 may be rotatably connected to the rim through hinge units 306 and 307 of FIG. 3B. The first temple 304 may be rotatably connected with respect to the first rim 301 through the first hinge unit 306 disposed between the first rim 301 and the first temple 304. The second temple 305 may be rotatably connected with respect to the second rim 302 through the second hinge unit 307 disposed between the second rim 302 and the second temple 305. According to an embodiment, the wearable device 300 may identify an external object (e.g., a user's fingertip) touching the frame and/or a gesture performed by the external object by using a touch sensor, a grip sensor, and/or a proximity sensor formed on at least a portion of the surface of the frame.

According to an embodiment, the wearable device 300 may include hardware (e.g., hardware described above based on the block diagram of FIG. 2) that performs various functions. For example, the hardware may include a battery module 370, an antenna module 375, optical devices 382 and 384, speakers 392-1 and 392-2, microphones 394-1, 394-2, and 394-3, a depth sensor module (not illustrated), and/or a printed circuit board 390. Various hardware may be disposed in the frame.

According to an embodiment, the microphones 394-1, 394-2, and 394-3 of the wearable device 300 may obtain a sound signal, by being disposed on at least a portion of the frame. The first microphone 394-1 disposed on the nose pad 310, the second microphone 394-2 disposed on the second rim 302, and the third microphone 394-3 disposed on the first rim 301 are illustrated in FIG. 3B, but the number and disposition of the microphone 394 are not limited to an embodiment of FIG. 3B. In a case that the number of the microphone 394 included in the wearable device 300 is two or more, the wearable device 300 may identify a direction of the sound signal by using a plurality of microphones disposed on different portions of the frame.

According to an embodiment, the optical devices 382 and 384 may transmit a virtual object transmitted from the at least one display 350 to the wave guides 333 and 334. For example, the optical devices 382 and 384 may be projectors. The optical devices 382 and 384 may be disposed adjacent to the at least one display 350 or may be included in the at least one display 350 as a portion of the at least one display 350. The first optical device 382 may correspond to the first display 350-1, and the second optical device 384 may correspond to the second display 350-2. The first optical device 382 may transmit light outputted from the first display 350-1 to the first waveguide 333, and the second optical device 384 may transmit light outputted from the second display 350-2 to the second waveguide 334.

In an embodiment, a camera 340 may include an eye tracking camera (ET CAM) 340-1, a motion recognition camera 340-2 and/or the photographing camera 340-3. The photographing camera 340-3, the eye tracking camera 340-1, and the motion recognition camera 340-2 may be disposed at different positions on the frame and may perform different functions. The photographing camera 340-3, the eye tracking camera 340-1, and the motion recognition camera 340-2 may be an example of the camera 225 of FIG. 2. The eye tracking camera 340-1 may output data indicating a gaze of the user wearing the wearable device 300. For example, the wearable device 300 may detect the gaze from an image including the user's pupil, obtained through the eye tracking camera 340-1. An example in which the eye tracking camera 340-1 is disposed toward the user's right eye is illustrated in FIG. 3B, but the embodiment is not limited thereto, and the eye tracking camera 340-1 may be disposed alone toward the user's left eye or may be disposed toward two eyes.

In an embodiment, the photographing camera 340-3 may photograph a real image or background to be matched with a virtual image in order to implement the augmented reality or mixed reality content. The photographing camera may photograph an image of a specific object existing at a position viewed by the user and may provide the image to the at least one display 350. The at least one display 350 may display one image in which a virtual image provided through the optical devices 382 and 384 is overlapped with information on the real image or background including the image of the specific object obtained by using the photographing camera. In an embodiment, the photographing camera may be disposed on the bridge 303 disposed between the first rim 301 and the second rim 302.

In an embodiment, the eye tracking camera 340-1 may implement a more realistic augmented reality by matching the user's gaze with the visual information provided on the at least one display 350, by tracking the gaze of the user wearing the wearable device 300. For example, when the user looks at the front, the wearable device 300 may naturally display environment information associated with the user's front on the at least one display 350 at a position where the user is positioned. The eye tracking camera 340-1 may be configured to capture an image of the user's pupil in order to determine the user's gaze. For example, the eye tracking camera 340-1 may receive gaze detection light reflected from the user's pupil and may track the user's gaze based on the position and movement of the received gaze detection light. In an embodiment, the eye tracking camera 340-1 may be disposed at a position corresponding to the user's left and right eyes. For example, the eye tracking camera 340-1 may be disposed in the first rim 301 and/or the second rim 302 to face the direction in which the user wearing the wearable device 300 is positioned.

The motion recognition camera 340-2 may provide a specific event to the screen provided on the at least one display 350 by recognizing the movement of the whole or portion of the user's body, such as the user's torso, hand, or face. The motion recognition camera 340-2 may obtain a signal corresponding to motion by recognizing the user's gesture, and may provide a display corresponding to the signal to the at least one display 350. A processor may identify a signal corresponding to the operation and may perform a preset function based on the identification. In an embodiment, the motion recognition camera 340-2 may be disposed on the first rim 301 and/or the second rim 302.

According to an embodiment, the camera 340 included in the wearable device 300 is not limited to the above-described eye tracking camera 340-1 and the motion recognition camera 340-2. For example, the wearable device 300 may identify an external object included in the FoV by using a photographing camera 340-3 disposed toward the user's FoV. The wearable device 300 identifying the external object may be performed based on a sensor for identifying a distance between the wearable device 300 and the external object, such as a depth sensor and/or a time of flight (ToF) sensor. The camera 340 disposed toward the FoV may support an autofocus function and/or an optical image stabilization (OIS) function. For example, in order to obtain an image including a face of the user wearing the wearable device 300, the wearable device 300 may include the camera 340 (e.g., a face tracking (FT) camera) disposed toward the face.

Although not illustrated, the wearable device 300 according to an embodiment may further include a light source (e.g., LED) that emits light toward a subject (e.g., user's eyes, face, and/or an external object in the FoV) photographed by using the camera 340. The light source may include an LED having an infrared wavelength. The light source may be disposed on at least one of the frame, and the hinge units 306 and 307.

According to an embodiment, the battery module 370 may supply power to electronic components of the wearable device 300. In an embodiment, the battery module 370 may be disposed in the first temple 304 and/or the second temple 305. For example, the battery module 370 may be a plurality of battery modules 370. The plurality of battery modules 370, respectively, may be disposed on each of the first temple 304 and the second temple 305. In an embodiment, the battery module 370 may be disposed at an end of the first temple 304 and/or the second temple 305.

In an embodiment, the antenna module 375 may transmit the signal or power to the outside of the wearable device 300 or may receive the signal or power from the outside. The antenna module 375 may be electrically and/or operably connected to communication circuitry (e.g., the communication circuitry 245 of FIG. 2) in the wearable device 300. In an embodiment, the antenna module 375 may be disposed in the first temple 304 and/or the second temple 305. For example, the antenna module 375 may be disposed close to one surface of the first temple 304 and/or the second temple 305.

The speakers 392-1 and 392-2 may output a sound signal to the outside of the wearable device 300. A sound output module may be referred to as a speaker. In an embodiment, the speakers 392-1 and 392-2 may be disposed in the first temple 304 and/or the second temple 305 in order to be disposed adjacent to the ear of the user wearing the wearable device 300. For example, the wearable device 300 may include a second speaker 392-2 disposed adjacent to the user's left ear by being disposed in the first temple 304, and a first speaker 392-1 disposed adjacent to the user's right ear by being disposed in the second temple 305.

The light emitting module (not illustrated) may include at least one light emitting element. The light emitting module may emit light of a color corresponding to a specific state or may emit light through an operation corresponding to the specific state in order to visually provide information on a specific state of the wearable device 300 to the user. For example, when the wearable device 300 requires charging, it may emit repeatedly red light at a designated time. In an embodiment, the light emitting module may be disposed on the first rim 301 and/or the second rim 302.

Referring to FIG. 3B, according to an embodiment, the wearable device 300 may include the printed circuit board (PCB) 390. The PCB 390 may be included in at least one of the first temple 304 or the second temple 305. The PCB 390 may include an interposer disposed between at least two sub PCBs. On the PCB 390, one or more hardware (e.g., hardware illustrated by blocks described above with reference to FIG. 2) included in the wearable device 300 may be disposed. The wearable device 300 may include a flexible PCB (FPCB) for interconnecting the hardware.

According to an embodiment, the wearable device 300 may include at least one of a gyro sensor, a gravity sensor, and/or an acceleration sensor for detecting the posture of the wearable device 300 and/or the posture of a body part (e.g., a head) of the user wearing the wearable device 300. Each of the gravity sensor and the acceleration sensor may measure gravity acceleration, and/or acceleration based on preset 3-dimensional axes (e.g., x-axis, y-axis, and z-axis) perpendicular to each other. The gyro sensor may measure angular velocity of each of preset 3-dimensional axes (e.g., x-axis, y-axis, and z-axis). At least one of the gravity sensor, the acceleration sensor, and the gyro sensor may be referred to as an inertial measurement unit (IMU). According to an embodiment, the wearable device 300 may identify the user's motion and/or gesture performed to execute or stop a specific function of the wearable device 300 based on the IMU.

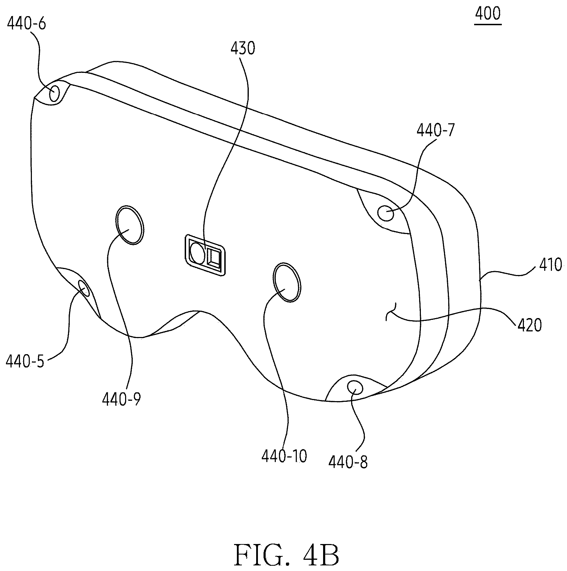

FIGS. 4A to 4B illustrate an example of an exterior of a wearable device 400 according to an embodiment. The wearable device 101 of FIGS. 1 and 2 may include the wearable device 400 of FIGS. 4A and 4B. According to an embodiment, an example of an exterior of a first surface 410 of a housing of the wearable device 400 may be illustrated in FIG. 4A, and an example of an exterior of a second surface 420 opposite to the first surface 410 may be illustrated in FIG. 4B.

Referring to FIG. 4A, according to an embodiment, the first surface 410 of the wearable device 400 may have an attachable shape on the user's body part (e.g., the user's face). Although not illustrated, the wearable device 400 may further include a strap for being fixed on the user's body part, and/or one or more temples (e.g., the first temple 304 and/or the second temple 305 of FIGS. 3A to 3B). A first display 350-1 for outputting an image to the left eye among the user's two eyes and a second display 350-2 for outputting an image to the right eye among the user's two eyes may be disposed on the first surface 410. The wearable device 400 may further include rubber or silicon packing, which are formed on the first surface 410, for preventing or reducing interference by light (e.g., ambient light) different from the light emitted from the first display 350-1 and the second display 350-2.

According to an embodiment, the wearable device 400 may include cameras 440-3 and 440-4 for photographing and/or tracking two eyes of the user adjacent to each of the first display 350-1 and the second display 350-2. The cameras 440-3 and 440-4 may be referred to as the ET camera. According to an embodiment, the wearable device 400 may include cameras 440-1 and 440-2 for photographing and/or recognizing the user's face. The cameras 440-1 and 440-2 may be referred to as a FT camera.

Referring to FIG. 4B, a camera (e.g., cameras 440-5, 440-6, 440-7, 440-8, 440-9, and 440-10), and/or a sensor (e.g., the depth sensor 430) for obtaining information associated with the external environment of the wearable device 400 may be disposed on the second surface 420 opposite to the first surface 410 of FIG. 4A. For example, the cameras 440-5, 440-6, 440-7, 440-8, 440-9, and 440-10 may be disposed on the second surface 420 in order to recognize an external object distinct from the wearable device 400. For example, by using cameras 440-9 and 440-10, the wearable device 400 may obtain an image and/or video to be transmitted to each of the user's two eyes. The camera 440-9 may be disposed on the second surface 420 of the wearable device 400 to obtain a frame to be displayed through the second display 350-2 corresponding to the right eye among the two eyes. The camera 440-10 may be disposed on the second surface 420 of the wearable device 400 to obtain an image to be displayed through the first display 350-1 corresponding to the left eye among the two eyes.

According to an embodiment, the wearable device 400 may include the depth sensor 430 disposed on the second surface 420 in order to identify a distance between the wearable device 400 and the external object. By using the depth sensor 430, the wearable device 400 may obtain spatial information (e.g., a depth map) about at least a portion of the FoV of the user wearing the wearable device 400.

Although not illustrated, a microphone for obtaining sound outputted from the external object may be disposed on the second surface 420 of the wearable device 400. The number of microphones may be one or more, according to embodiments.

As described above, according to an embodiment, the wearable device 400 may have a form factor for being worn on the user's head. The wearable device 400 may provide a user experience based on AR and/or MR, in a state of being worn on the head. The wearable device 400 may display a background object by using the first display 350-1 and the second display 350-2. The wearable device 400 may display at least one foreground object provided from at least one application together with the background object. While overlappingly displaying the at least one foreground object with the background object, the wearable device 400 may change an attribute used to display the background object, based on a size and/or number of the at least one foreground object.

Hereinafter, an example of an operation in which a wearable device (e.g., the wearable device 101 of FIGS. 1 to 2) including the wearable device 300 of FIGS. 3A to 3B and/or the wearable device 400 of FIGS. 4A to 4B changes a background object based on displaying a foreground object on at least one display 350 will be described with reference to FIG. 5.

FIGS. 5A, 5B, 5C, and 5D illustrate an example of an operation in which the wearable device 101 changes a background object according to an embodiment. The wearable device 101 of FIGS. 1 and 2 may include the wearable device 101 of FIGS. 5A, 5B, 5C, and 5D. For example, an operation of the wearable device 101 described with reference to FIGS. 5A, 5B, 5C, and 5D may be performed by the wearable device 101 and/or processor 210 of FIG. 2.

Referring to FIG. 5A, an exemplary state 501 in which the wearable device 101 according to an embodiment displays a background object on a display (e.g., the display 220 of FIG. 2 and/or at least one display 350 described with reference to FIGS. 3A to 4B) is illustrated. The background object may be an example of the background object 130 of FIG. 1. In a state that the user 110 wears the wearable device 101, the wearable device 101 may display at least a portion of the background object in a display area 510 formed by a display. For example, the wearable device 101 may display a virtual object 530 representing a rigid body as the background object. The wearable device 101 may provide, to the user 110, a sense of distance with respect to the virtual object 530 using a depth value and/or binocular parallax based on a z-axis illustrated in FIG. 5A. For example, the wearable device 101 may adjust locations of the virtual object 530 visible to each of the user's two eyes to have a deviation based on the binocular parallax. A virtual object displayed by the wearable device 101 as a background object is not limited to the virtual object 530 having a form such as a rigid body. For example, the wearable device 101 may display a virtual object representing a natural environment such as clouds and/or the sun as a background object, such as the virtual objects 131 and 132 of FIG. 1.

Referring to FIG. 5A, according to an embodiment, the wearable device 101 may display particles 520 as the background object. The wearable device 101 may play a dynamic animation related to a virtual space (e.g., the virtual space 120 of FIG. 1) including a background object to the user 110, based on movement of the particles 520. The particles 520 may be moved along a designated direction (e.g., -y direction) in the display area 510. The embodiment is not limited thereto, and the particles 520 may be moved in the display area 510 along a direction related to motion of the user 110 wearing the wearable device 101. The particles 520 may be disposed in a virtual space based on a background application executed for displaying a background object. The particles 520 may have a shape (e.g., snowflakes, raindrops, and/or fallen leaves) for representing weather information. The particles 520 may have a shape for representing a light source.

According to an embodiment, the wearable device 101 may perform rendering on at least a portion of a background object, based on a view angle in a virtual space, matched to the display area 510. The wearable device 101 may identify at least one attribute assigned to a background object for the rendering. The at least one attribute may include a brightness of a background object. The at least one attribute may include at least one parameter related to visibility of a background object, such as chroma, lightness, and/or transparency. The at least one attribute, which is a parameter used for rendering the particles 520, may include a particle density, a particle speed, a particle resolution, and/or a particle type. According to an embodiment, the wearable device 101 may change the at least one attribute, based on extent of a background object exposed to the user 110 through the display area 510 and/or a size of a foreground object overlapping the background object in the display area 510. Based on the changed at least one attribute, the wearable device 101 may perform rendering on the background object. For example, the wearable device 101 may change a background object, based on a change in the number and/or a size of foreground objects included in the display area 510.

In an embodiment, attributes used by the wearable device 101 for rendering a background object may be grouped into different data sets, as shown in Table 1.

**[Tabel 1]**

| Category | Attribute | First data set | Second data set | Third data set | Fourth data set |
|---|---|---|---|---|---|
| Visual | Brightness | 100% | 80% | 40% | 0% |
| | Chroma | 100% | 100% | 50% | 0% |
| | Particle density | 100% | 100% | 0% | 0% |
| | Particle speed | 100% | 50% | 0% | 0% |
| | Vignetting effect | 0% | 0% | 80% | 100% |
| Auditory | Sound volume (the state in which mixing of different audio signals is allowed) | 100% | 50% | 5% | 0% |
| | Sound volume (the state of playing a specific audio signal exclusively) | 100% | 0% | 0% | 0% |
| | Sound pitch | 100% | 100% | 5% | 0% |
| | Sound speed | 100% | 50% | 25% | 0% |

Referring to Table 1, the first data set may indicate, in a state (e.g., the state 501 of FIG. 5A and/or the state 191 of FIG. 1) of completely outputting a background object and/or an audio signal corresponding to the background object, an attribute corresponding to the background object and/or the audio signal. For example, the first data set in Table 1 may include a state (e.g., an idle state) in which the wearable device 101 does not display any foreground objects in the display area 510, such as the state 501. According to an embodiment, the wearable device 101 may select any one of the designated data sets of Table 1, based on the number and/or a size of one or more foreground objects included in the display area 510. The wearable device 101 may adjust a brightness of the background object or play an audio signal corresponding to the background object based on the selected data set.

According to an embodiment, the wearable device 101 may select a data set applied as a background object among the data sets of Table 1, based on the number of foreground objects included in a display. For example, when the number of foreground objects is one, the wearable device 101 may select the second data set of Table 1. For example, when the number of foreground objects is two, the wearable device 101 may select the third data set of Table 1. For example, when the number of foreground objects is greater than three, the wearable device 101 may select the fourth data set of Table 1. Based on the selected data set, the wearable device 101 may perform rendering on the background object. When an audio signal corresponding to a background object is played, the wearable device 101 may change an attribute related to the audio signal, based on the selected data signal.

Referring to FIG. 5B, according to an embodiment, an exemplary state 502 in which the wearable device 101 displays a weather widget 540 as a foreground object at least partially overlapping the background object is illustrated. For example, the wearable device 101 may add a virtual object corresponding to the weather widget 540 to a virtual space, based on an execution of an application (e.g., a weather application). According to an embodiment, the wearable device 101 may identify that the weather widget 540 is additionally displayed while switching from the state 501 to the state 502. In a state 502 of displaying one foreground object, such as the weather widget 540, the wearable device 101 may display a background object based on the second data set of Table 1. For example, the wearable device 101 may adjust a brightness of the background object to 80% and a speed at which the particles 520 move to 50%. For example, while switching from the state 501 to the state 502, the wearable device 101 may reduce a brightness of the background object and a movement speed of the particles 520. Similarly, when the state 502 is changed to the state 501 based on a cessation and/or a termination of an application corresponding to the weather widget 540, the wearable device 101 may increase the brightness of the background object and the movement speed of the particles 520.

According to an embodiment, the wearable device 101 may manage audio signals of different applications and/or processes, based on different sound paths. The sound path may be a unit for classifying audio data from an application executed by a processor (e.g., the processor 210 of FIG. 2) of the wearable device 101 toward a speaker (e.g., the speaker 240 of FIG. 2) of the wearable device 101. The wearable device 101 may manage a playback of audio data by using an attribute assigned to each of the sound paths. The attribute may include at least one of a sound volume, a sound pitch, and/or a sound speed of Table 1.

Referring to FIG. 5B, in a state 502 of displaying one foreground object (e.g., the weather widget 540), the wearable device 101 according to an embodiment may control a sound path corresponding to a background object, based on an attribute included in the second data set of Table 1. Controlling the sound path by the wearable device 101 may include, based on an attribute corresponding to the sound path, an operation of controlling a speaker and/or changing the attribute. For example, when an audio signal is provided from an application corresponding to the weather widget 540, and the audio signal does not cease playing another audio signal, the wearable device 101 may change a volume of an audio signal corresponding to a background obj ect to 50% based on the second data set of Table 1. For example, when an audio signal is provided from an application corresponding to the weather widget 540, and the audio signal is set to cease playing another audio signal, the wearable device 101 may change a volume of an audio signal corresponding to a background object to 0% based on the second data set of Table 1. Changing the volume of the audio signal corresponding to the background object by the wearable device 101 may be performed in response to an input of selecting a foreground object included in the display area 510.

Referring to FIG. 5C, according to an embodiment, an exemplary state 503 in which the wearable device 101 displays two foreground objects (e.g., the weather widget 540 and a messenger window 550) is illustrated. In the state 503, the wearable device 101 may display the messenger window 550 on the display area 510 based on an execution of the messenger application. In the messenger window 550, the wearable device 101 may visualize information related to the messenger application. The messenger window 550 may be disposed in a virtual space toward a point (e.g., the point O' of FIG. 1) matched to the wearable device 101. For example, a direction of a normal line of the messenger window 550 in the virtual space may be directed to the point matched to the wearable device 101.

As illustrated in FIG. 5C, in a state 503 of displaying two foreground objects, the wearable device 101 may perform rendering on the background object based on the third data set of Table 1. For example, the wearable device 101 may adjust a brightness of the background object to 40% and a chroma of the background object to 50%. The wearable device 101 may cease to display the particles 520 which was displayed in the states 501 and 502, by adjusting the particle density to 0%. By at least temporarily ceasing rendering of the particles 520, the wearable device 101 may use a resources of the wearable device 101 occupied for rendering of the particles 520 to execute a function related to foreground objects. For example, the wearable device 101 may reduce a degree to which a resource of the wearable device 101 is occupied for the background object in proportion to the number of foreground objects.

According to an embodiment, in the state 503, the wearable device 101 may apply a vignetting effect having a size of 80% to a background object, based on the third data set of Table 1. Based on the vignetting effect, a brightness of a portion of the background object surrounding a foreground object included in the display area 510 may be darker than a brightness of another portion of the background object spaced apart from the foreground object. Based on the vignetting effect, the wearable device 101 may make a brightness of a portion of the background object relatively close to a foreground object to be darker than other portions. An operation in which a brightness of a background object is partially changed based on the vignetting effect will be described with reference to FIG. 6.

In the state 503 of FIG. 5C, the wearable device 101 may change an attribute of an audio signal corresponding to a background object, based on the third data set of Table 1. For example, in a state that mixing of a plurality of audio signals is allowed, the wearable device 101 may change a sound volume of an audio signal corresponding to a background object to 5%. In the example, the wearable device 101 may change a sound pitch of the audio signal corresponding to the background object to 5%. In the example, the wearable device 101 may change a sound speed of the audio signal corresponding to the background object to 25%. For example, when a speaker of the wearable device 101 is exclusively used based on at least one of foreground objects executed in the state 503, the wearable device 101 may change a sound volume of the audio signal corresponding to the background object to 0%.

Referring to FIG. 5D, a state 504 in which the wearable device 101 according to an embodiment executes an application occupying the entire display area 510 is illustrated. For example, the wearable device 101 may display a foreground object covering the entire background object based on an execution of a game application. For example, the wearable device 101 may replace a virtual space including the background object with another virtual space provided by the game application, based on the execution of the game application.

According to an embodiment, the wearable device 101 may change at least one attribute assigned to a background object, based on the fourth data set of Table 1, in a state 504 in which the foreground object is displayed on the entire display area 510. The wearable device 101 may change a brightness and/or a chroma of the background object to 0%. The wearable device 101 may change a density and/or a speed of particles included in the background object to 0%. For example, the wearable device 101 may completely cease rendering the background object. The wearable device 101 may change, based on the fourth data set, a sound volume, a sound pitch, and/or a sound speed of an audio signal corresponding to the background object to 0%. For example, in the state 504, the wearable device 101 may cease playing the audio signal corresponding to the background object.

In the states 502, 503, and 504 of FIGS. 5B to 5D, the wearable device 101 may maintain an attribute for rendering a foreground object while rendering the background object based on different data sets of Table 1. The wearable device 101 may maintain a brightness of the foreground object while changing a brightness of the background object between the states 502, 503, and 504. Since the brightness of the foreground object is maintained and the brightness of the background object is selectively darkened, the wearable device 101 may emphasize at least one foreground object (e.g., the weather widget 540 and/or the messenger window 550) included in the display area 510 in the states 502, 503, and 504.

As mentioned above, according to an embodiment, the wearable device 101 may select any one of the designated data sets of Table 1 based on the number of foreground objects included in the display area 510, and perform rendering on a background object displayed beyond the foreground object based on the selected data set. For example, in order to emphasize a foreground object, the wearable device 101 may change an attribute used for rendering a background object. While switching from the state 501 to the state 504, the wearable device 101 may gradually reduce the brightness and/or the chroma of the background object based on the increase in the number of foreground objects included in the display area 510, thereby improving visibility of the foreground object. In addition to improving the visibility of the foreground object, the wearable device 101 may gradually reduce a volume of an audio signal corresponding to the background object, thereby emphasizing another audio signal matched to the foreground object.

Although an operation in which the wearable device 101 performs rendering on a background object based on Table 1 has been described, the embodiment is not limited thereto. For example, the wearable device 101 may select any one of the data sets in Table 2 based on the number and/or a size of foreground objects included in the display area 510 and perform rendering on the background object based on the selected data set.

**[Table 2]**

| Category | Attribute | a-th data set | b-th data set | c-th data set | d-th data set |
|---|---|---|---|---|---|
| Visual | Brightness | 100% | 40% | 20% | 0% |
| | Chroma | 100% | 50% | 10% | 0% |
| | Particle density | 100% | 0% | 0% | 0% |
| | Particle speed | 100% | 0% | 0% | 0% |
| | Vignetting effect | 0% | 80% | 80% | 0% |
| Auditory | Sound volume | 100% | 50% | 5% | 0% |
| | Sound pitch | 100% | 5% | 5% | 0% |
| | Sound speed | 100% | 25% | 25% | 0% |

Referring to Table 2, the wearable device 101 may perform rendering on the background object based on the a-th data set of Table 2 in a state (e.g., the state 501 of FIG. 5A and/or the state 191 of FIG. 1) in which the wearable device 101 does not display any foreground object in the display area 510, such as an idle state. In the idle state, in a case that a foreground object is added (e.g., the state 502 of FIG. 5B), the wearable device 101 may perform rendering on the background object based on the b-th data set of Table 2. As the data set applied to the background object is switched from the a-th data set of Table 2 to the b-th data set, the wearable device 101 may reduce the brightness of the background object from 100% to 40%.

According to an embodiment, the wearable device 101 may reduce a sound volume of an audio signal corresponding to a background object, based on whether a foreground object playing an audio signal is focused. For example, in the state 502 of FIG. 5B, the wearable device 101 that performs rendering on a background object based on the b-th data set of Table 2 may identify an input for selecting and/or focusing the weather widget 540. Based on identifying an audio signal corresponding to the weather widget 540, the wearable device 101 may reduce a sound volume of the audio signal corresponding to the background object from 50% of the b-th data set to 25%.

In an embodiment of applying any one of the data sets of Table 2, the wearable device 101 may change the data set so that the brightness of the background object is reduced as the number and/or size of the foreground object is increased. When the state 502 of FIG. 5B of rendering the background object using the b-th data set is switched to the state 503 of additionally executing the messenger window 550, the wearable device 101 may select the c-th data set from the b-th data set of Table 2. Based on rendering the background object using the selected c-th data set, the wearable device 101 may reduce the brightness of the background object from 40% to 20%. When the number of foreground objects is increased or the size of the foreground object in the display area 510 is increased after the state 503 of FIG. 5C, the wearable device 101 may reduce a brightness of the background object to be less than a brightness of the c-th data set. The embodiment is not limited thereto, and the wearable device 101 may reduce a chroma, a particle density, and/or a particle speed of the background object, or increase a vignetting effect.

In an embodiment of applying any one of the data sets of Table 2, in a case that the background object is completely covered (e.g., the state 504 of FIG. 5D), the wearable device 101 may at least temporarily cease rendering on the background object, based on the d-th data set of Table 2. Although an operation in which the number and/or size of foreground objects is increased has been described, embodiments are not limited thereto. For example, when the number and/or size of foreground objects is reduced, the wearable device 101 may select any one of the data sets in Table 2, thereby gradually increasing a brightness and/or a chroma of the background object.

In an embodiment, the wearable device 101 may change an attribute used for rendering the background object, based on the size of the foreground object in the display area 510. Hereinafter, an example of an operation in which the wearable device 101 changes a set (e.g., data set) of attributes applied to rendering of a background object, based on the size of one or more foreground objects will be described with reference to FIG. 6.

FIG. 6 illustrates an example of an operation in which a wearable device 101 changes at least a portion of a background object based on a location and/or a size of a foreground object 610, according to an embodiment. The wearable device 101 of FIGS. 1 and 2 may include the wearable device 101 of FIG. 6. An operation of the wearable device 101 described with reference to FIG. 6 may be performed by the wearable device 101 and/or the processor 210 of FIG. 2.

Referring to FIG. 6, different states 601 and 602 in which the wearable device 101 according to an embodiment displays a foreground object 610 are illustrated. The foreground object 610 may include a window and/or a widget provided from an application executed by the wearable device 101. The wearable device 101 may arrange a foreground object 610 in a virtual space 120, together with a background object 130. The states 601 and 602 of FIG. 6 may be exemplary states in which the wearable device 101 displays a portion of the virtual space 120 based on view angles facing different directions D1' and D2'. The directions D1' and D2' may be related to motion of a user 110 (e.g., motion of a head of the user 110 wearing the wearable device 101) identified by a sensor (e.g., the sensor 230 of FIG. 2) of the wearable device 101.

According to an embodiment, the wearable device 101 may select a data set applied to a background object from among data sets of Table 1 to Table 2, based on the size of one or more foreground objects included in a display area. For example, when a ratio between the size of one or more foreground objects and the size of the display area is less than a first designated ratio, the wearable device 101 may perform rendering on the background object, based on the first data set in Table 1. For example, when the ratio is greater than or equal to the first designated ratio and is less than a second designated ratio greater than the first designated ratio, the wearable device 101 may perform rendering on the background object based on the second data set in Table 1. For example, when the ratio is greater than or equal to the second designated ratio and is less than a third designated ratio greater than the second designated ratio, the wearable device 101 may perform rendering on the background object based on the third data set in Table 1. For example, when the ratio is greater than or equal to the third designated ratio, the wearable device 101 may perform rendering on the background object based on the fourth data set of Table 1. The above-described first designated ratio to the fourth designated ratio may be referred to as a threshold ratio. According to the above-described first designated ratio to the fourth designated ratio, a ratio of a size in which the foreground object occupies the display area may be divided into different size ranges. The size ranges may be formed between the first designated ratio and the fourth designated ratio.

In the state 601 of FIG. 6, the wearable device 101 may select a set of attributes used for rendering the background object, based on the ratio in which the foreground object 610 occupies the display area, from among the designated data sets of Table 1 to Table 2. The wearable device 101 may reduce, while maintaining the brightness of the foreground object 610, a brightness of the background object to be less than a brightness of the foreground object 610. Since the brightness of the background object is reduced, the wearable device 101 may emphasize and display the foreground object 610. When outputting an audio signal provided from the background object, the wearable device 101 may reduce a volume of the audio signal in proportion to the ratio in which the foreground object 610 occupies the display area. When the foreground object 610 is focused, the wearable device 101 may additionally reduce a volume of an audio signal corresponding to the background object.

According to an embodiment, the wearable device 101 may change a brightness of the background object, based on a change in a size in which the foreground object 610 is displayed. For example, in response to a change in a view angle by motion detected by the wearable device 101, or an input for changing the size and/or number of the foreground objects 610, the wearable device 101 may identify a change in the size in which the foreground object 610 is displayed. For example, the wearable device 101 may identify that a size of the background object covered by the foreground object 610 is changed. Based on the change in the size in which the foreground object 610 is displayed, the wearable device 101 may change the brightness of the background object. For example, the wearable device 101 may change the brightness of the background object so that the brightness of the background object is inversely proportional to the size. The embodiment is not limited thereto, and the wearable device 101 may change a chroma, a particle density, and/or a particle speed of the background object based on a change in the size.

Referring to FIG. 6, in a state 601 of displaying the foreground object 610 based on a view angle formed along the direction D1', the wearable device 101 may identify motion of the wearable device 101 that rotates by an angle Q. The motion may be generated by a user 110 wearing the wearable device 101. Based on the motion, the wearable device 101 may form a view angle along a direction D2' having a difference from the direction D1' by the angle Q, in the virtual space 120. Based on the view angle formed along the direction D2', the wearable device 101 may perform rendering on at least a portion of the virtual space 120 in the display area.

Referring to FIG. 6, according to an embodiment, a state 602 in which the wearable device 101 perform rendering on at least a portion of the virtual space 120 based on a view angle formed along the direction D2' is illustrated. In the state 602, the wearable device 101 may change the brightness of the background object, based on a change in the size of the foreground object 610 included in the display area. For example, the wearable device 101 may select any one of the data sets of Table 1 to Table 2, based on the changed size and a ratio of the display area.

According to an embodiment, based on a distance by which each of different portions of the background object is spaced apart from the foreground object 610, the wearable device 101 may change the brightness of the portions differently. Referring to the state 602, the wearable device 101 may reduce a brightness of a first section L1 of the background object, which is spaced apart from the foreground object 610, to be less than a brightness of a second section L2, which is spaced apart from the foreground object 610 farther than the first section L1. The wearable device 101 may apply a vignetting effect surrounding the foreground object 610 by adjusting the brightness of different sections of the background object to a brightness inversely proportional to the distance spaced from the foreground object 610.

As described above, the wearable device 101 according to an embodiment may change a brightness of a background object viewed to surround the foreground object 610, based on a size of the foreground object 610 viewed through the display area. The wearable device 101 may enhance visibility of the foreground object 610 by making a portion of the background object adjacent to the foreground object 610 to be darker than other portions of the background object.

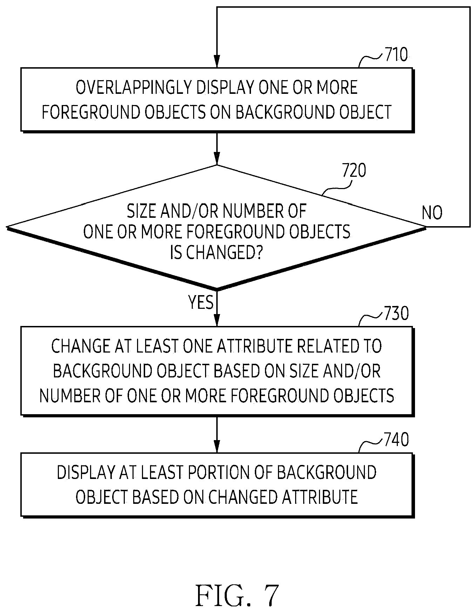

Hereinafter, an operation of the wearable device 101 according to an embodiment will be described based on the flowchart of FIG. 7.

FIG. 7 illustrates an example of a flowchart of a wearable device according to an embodiment. The wearable device 101 of FIGS. 1 and 2 may include the wearable device of FIG. 7. The operation of FIG. 7 may be performed by the wearable device 101 and/or the processor 210 of FIG. 2.

Referring to FIG. 7, in operation 710, the wearable device according to an embodiment may overlappingly display one or more foreground objects on a background object (e.g., the background object 130 of FIG. 1). The wearable device may display a background object and one or more foreground objects, based on a view angle formed in a virtual space (e.g., the virtual space 120 of FIG. 1). The wearable device may select at least one attribute (e.g., a brightness, a chroma, a lightness, a particle density, and/or a particle speed) related to rendering of the background object, based on a size and/or the number of one or more foreground objects displayed on a display (e.g., the display 220 of FIG. 2).

Referring to FIG. 7, in operation 720, the wearable device according to an embodiment may identify whether the size and/or the number of one or more foreground objects is changed. Before the size and/or the number of one or more foreground objects is changed (720-NO), the wearable device may maintain displaying a background object and one or more foreground objects based on operation 710. For example, the wearable device may maintain a brightness of the background object.

In a state that the size and/or the number of one or more foreground objects is changed (720-YES), the wearable device may change at least one attribute for outputting the background object based on the size and/or the number of one or more foreground objects, by performing operation 730. The wearable device may change an attribute to be applied for rendering of the background object, based on the changed size and/or the changed number, among designated data sets (e.g., the designated data sets in Table 1 and/or Table 2). The wearable device may change an attribute which was used for rendering the background object of operation 710 based on operation 730.

Referring to FIG. 7, in operation 740, the wearable device according to an embodiment may display at least a portion of the background object based on the changed attribute. According to an embodiment, the wearable device may change a brightness and/or a chroma of the background object, based on the attribute selected by the change in the size and/or the number of one or more foreground objects. When playing an audio signal corresponding to the background object, the wearable device may change a sound volume, a sound pitch, and/or a sound speed of the audio signal based on the selected attribute.

As described above, the wearable device according to an embodiment may change at least one attribute (e.g., a brightness, a chroma, a particle density, a particle speed, a sound volume, a sound pitch, and/or a sound speed) used for outputting a background object, based on a relationship between a background object included in a display and a foreground object overlapping the background object. For example, the wearable device may select, among designated sets (e.g., data sets in Table 1 and/or Table 2) of attributes, any one set based on a size and/or the number of one or more foreground objects overlapping a background object, and change the background object displayed on the display based on the selected set. For example, in order to emphasize the foreground object, the wearable device may reduce a brightness of the background object as the size and/or the number of foreground objects is increased.

According to an embodiment, the wearable device may change at least one attribute (e.g., a brightness, a chroma, a particle density, a particle speed, a sound volume, a sound pitch, and/or a sound speed) used for outputting a background object, based on a location of the background object (e.g., a center location of the background object, a corner location of the background object, and/or a vertex location of the background object) included in a display, and a location (e.g., a center location of the foreground object, a corner location of the foreground object, and/or a vertex location of the foreground object) of the foreground object. For example, the wearable device may reduce a brightness of the background object, based on identifying that a distance between the center location of the background object included in the display and the center location of the foreground object is less than a designated distance. The embodiment is not limited thereto, and the location of the background object may be included or stored in information (e.g., a file) used for rendering the background object. The location of the foreground object may be included or stored in information (e.g., a file) for executing an application and/or a program executed by the wearable device for displaying the foreground object.

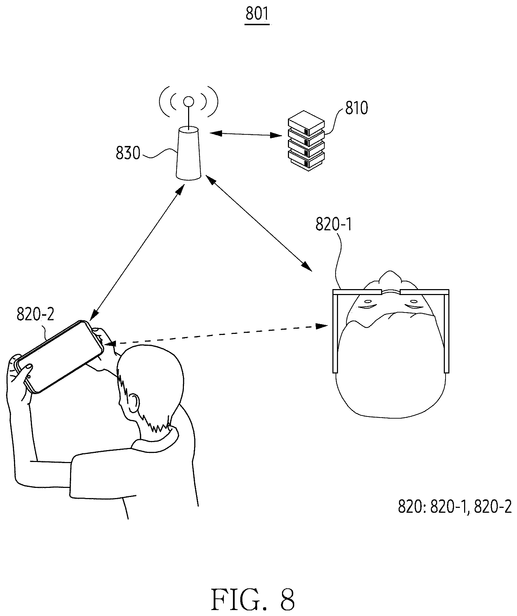

The operation of the wearable device described above with reference to FIGS. 1 to 7 may be related to a metaverse service provided through a network. Hereinafter, an example of a metaverse service provided to a user based on a wearable device according to an embodiment will be described with reference to FIG. 8.

Metaverse is a compound word of the English words "Meta" meaning "virtual" and "transcendence" and "Universe" meaning cosmos, and refers to a three-dimensional virtual world in which social, economic, and cultural activities take place like a real world. Metaverse is a concept that has evolved one step further than a virtual reality (VR, cutting-edge technology that enables people to experience real-life experiences in a virtual world created by a computer), and it is characterized by using avatars to not only enjoy games or virtual reality, but also social and cultural activities like a reality. A metaverse service may provide media content for enhancing immersion in the virtual world, based on an augmented reality (AR), a virtual reality environment (VR), a mixed environment (MR), and/or an extended reality (XR).

For example, media content provided by the metaverse service may include social interaction content including avatar-based game, concert, party, and/or meeting. For example, the media content may include information for economic activities such as advertising, user created content, and/or sales and/or shopping of productions. Ownership of the user created content may be proved by a blockchain-based non-fungible token (NFT). The metaverse service may support economic activities based on real money and/or cryptocurrency. By the metaverse service, virtual content associated with the real world, such as digital twin or life logging, may be provided.

FIG. 8 is an exemplary diagram of a network environment in which a metaverse service is provided through a server.

Referring to FIG. 8, a network environment 801 may include a server 810, a user terminal 820 (e.g., a first terminal 820-1 and a second terminal 820-2), and a network connecting the server 810 and the user terminal 820. In the network environment 801, the server 810 may provide a metaverse service to the user terminal 820. The network may be formed by at least one intermediate node 830 including an access point (AP) and/or a base station. The user terminal 820 may access the server 820 through the network and output a user interface (UI) associated with a metaverse service to a user of the user terminal 820. Based on the UI, the user terminal 820 may obtain information to be inputted into the metaverse service from the user, or output information (e.g., multimedia content) associated with the metaverse service to the user.

In this case, the server 810 provides a virtual space so that the user terminal 820 may perform activities in the virtual space. In addition, the user terminal 820 may represent information provided by the server 810 to the user by installing an S/W agent to access the virtual space provided by the server 810, or transmit information that the user wants to represent in the virtual space to the server. The S/W agent may be provided directly through the server 810, downloaded from a public server, or embedded and provided when purchasing a terminal.

In an embodiment, the metaverse service may provide a service to the user terminal 820 and/or a user by using the server 810. The embodiment is not limited thereto, and the metaverse service may be provided through individual contacts between users. For example, in the network environment 801, the metaverse service may be provided by a direct connection between the first terminal 820-1 and the second terminal 820-2, independently of the server 810. Referring to FIG. 8, in the network environment 801, the first terminal 820-1 and the second terminal 820-2 may be connected to each other through a network formed by at least one intermediate node 830. In an embodiment in which the first terminal 820-1 and the second terminal 820-2 are directly connected, any one of the first terminal 820-1 and the second terminal 820-2 may perform a role of the server 810. For example, a metaverse environment may be configured only with a device-to-device connection (e.g., a peer-to-peer (P2P) connection).

In an embodiment, the user terminal 820 (or the user terminal 820 including the first terminal 820-1 and the second terminal 820-2) may be made in various form factors, and it is characterized by including an output device for providing an image and/or sound to the user and an input device for inputting information into the metaverse service. An exemplary user terminal 820 in various form factors may include a smartphone (e.g., the second terminal 820-2), an AR device (e.g., the first terminal 820-1), a VR device, an MR device, a Video See Through (VST) device, an Optical See Through (OST) device, a smart lens, a smart mirror, a TV capable of inputting and outputting, or a projector.

A network (e.g., a network formed by at least one intermediate node 830) includes all of various broadband networks including 3G, 4G, and 5G and short-range networks (e.g., a wired network or a wireless network that directly connects the first terminal 820-1 and the second terminal 820-2) including Wi-Fi and BT.

In an embodiment, the user terminal 820 of FIG. 8 may include the wearable device 101 of FIGS. 1 to 7.

In an embodiment, in a state of displaying a background object and a foreground object overlapping the background object through a display of a wearable device, a method of emphasizing the foreground object may be required. As described above, according to an embodiment, a wearable device (e.g., the wearable device 101 of FIGS. 1 to 2) may comprise a display (e.g., the display 220 of FIG. 2), memory (e.g., the memory 215 of FIG. 2) for storing instructions, and a processor (e.g., the processor 210 of FIG. 2). The instructions, when executed by the processor, may cause the wearable device to display, overlappingly on a background object (e.g., the background object 130 of FIG. 1) having a first brightness, a foreground object on the display. The instructions, when executed by the processor, may cause the wearable device to change a brightness of the background object to a second brightness less than the first brightness, based on identifying that a size of the foreground object is expanded to be greater than a reference size range. According to an embodiment, the wearable device may emphasize the one or more foreground objects by changing an attribute (e.g., a brightness of a background object) for displaying the background object, based on a size and/or number of one or more foreground objects included in the display.

According to an embodiment, a wearable device may comprise a display, memory storing instructions, and a processor. The instructions, when executed by the processor, may cause the wearable device to display, overlappingly on a background object having a first brightness, a foreground object on the display. The instructions, when executed by the processor, may cause the wearable device to, based on identifying that a size of at least a portion of the display occupied by the foreground object has been increased, change a brightness of the background object from the first brightness to a second brightness smaller than the first brightness.

For example, the wearable device may include a speaker (e.g., the speaker 240 of FIG. 2). The instructions, when executed by the processor, may cause the wearable device to output an audio signal of a first volume corresponding to the reference size range through the speaker, based on execution of a process corresponding to the background object.

For example, the instructions, when executed by the processor, may cause the wearable device to display the background object in the display by executing a process different from a process executed to display the foreground object, and output an audio signal of a first volume corresponding to the reference size range through the speaker.

For example, the instructions, when executed by the processor, may cause the wearable device to, based on identifying that a size of the foreground object is expanded to be greater than the reference size range, change the first volume of the audio signal to a second volume smaller than the first volume. The instructions, when executed by the processor, may cause the wearable device to, based on identifying that the size of the foreground object is reduced to be smaller than the reference size range, change the first volume of the audio signal to a third volume greater than the first volume.

For example, the instructions, when executed by the processor, may cause the wearable device to, in response to an input to focus the foreground object in a state outputting the audio signal which is a first audio signal, change the first volume of the first audio signal to a second volume lower than the first volume based on identifying a second audio signal corresponding to the foreground object.

For example, the instructions, when executed by the processor, may cause the wearable device to, while displaying the foreground object which is a widget which is executed by the processor to provide the second audio signal, receive the input to focus the foreground object.

For example, the wearable device may include a sensor (e.g., the sensor 230 of FIG. 2). The instructions, when executed by the processor, may cause the wearable device to, based on identifying motion of the wearable device using data of the sensor, move the foreground object in the display. The instructions, when executed by the processor, may cause the wearable device to change, by comparing the reference size range to a size that the moved foreground object is displayed in the display, a brightness of the background object.

For example, the instructions, when executed by the processor, may cause the wearable device to, in a state displaying a first portion of the background object adjacent to the foreground object with the first brightness, display a second portion of the background object distinguished by the first portion with a brightness greater than the first brightness.

For example, the instructions, when executed by the processor, may cause the wearable device to, in a state displaying the foreground object which is a first foreground object, reduce, based on identifying a second foreground object distinguished by the first foreground object, a brightness of the background object from the first brightness to the second brightness.

For example, the instructions, when executed by the processor, may cause the wearable device to, in a state changing a brightness of the background object, maintain a brightness of the foreground object.

For example, the instructions, when executed by the processor, may cause the wearable device to, in a state changing a brightness of the background object to the second brightness smaller than the first brightness, reduce at least one of a density or a speed of a plurality of particles (e.g., the particles 520 of FIGS. 5A, 5B, 5C, and 5D) included in the background object.

For example, the instructions, when executed by the processor, may cause the wearable device to, in a state displaying the background object using a first chroma, change, based on identifying that a size of the foreground object is expanded to be greater than the reference size range, a chroma of the background object to a second chroma smaller than the first chroma.

For example, the instructions, when executed by the processor, may cause the wearable device to, based on identifying that a size of the foreground object is reduced to be smaller than the reference size range, change a brightness of the background object to a third brightness greater than the first brightness.

As described above, according to an embodiment, a method of a wearable device may comprise displaying, on a display of the wearable device, a background object having a first brightness and one or more foreground objects superimposed on the background object. The method may comprise, in a state displaying the background object with the first brightness associated with a number of the one or more foreground objects, identifying the number of the foreground objects based on at least one application executed by a processor of the wearable device. The method may comprise, based on identifying increasing of the number of the one or more foreground objects, changing a brightness of the background object to a second brightness smaller than the first brightness.

For example, the displaying may comprising displaying, based on a size of the one or more foreground objects displayed through the display, the background object using the first brightness selected among a plurality of preset brightnesses.

For example, the changing a brightness of the background object to the second brightness may include maintaining a brightness of the one or more foreground objects while changing the brightness of the background object.

For example, the changing a brightness of the background object to the second brightness may include reducing a volume used to output an audio signal corresponding to the background object to a second volume lower than a first volume matching the first brightness.

For example, the reducing may include reducing the volume to a third volume lower than the second volume, based on identifying, from the one or more foreground objects, a second audio signal distinct from a first audio signal corresponding to the background object.

For example, the method may include changing a brightness of the background object to a third brightness greater than the first brightness, based on identifying that the number of the one or more foreground objects is reduced.

As described above, according to an embodiment, a method of a wearable device may comprise displaying, overlappingly on a background object having a first brightness, a foreground object on a display of the wearable device. The method may comprise changing a brightness of the background object to a second brightness less than the first brightness, based on identifying that a size of the foreground object is expanded to be greater than a reference size range.

For example, the displaying may comprise outputting an audio signal of a first volume corresponding to the reference size range through a speaker of the wearable device, based on execution of a process corresponding to the background object.

For example, the method may comprise, based on identifying that a size of the foreground object is expanded to be greater than the reference size range, changing the first volume of the audio signal to a second volume smaller than the first volume. The method may comprise, based on identifying that the size of the foreground object is reduced to be smaller than the reference size range, changing the first volume of the audio signal to a third volume greater than the first volume.

For example, the method may comprise, in response to an input to focus the foreground object in a state outputting the audio signal which is a first audio signal, changing the first volume of the first audio signal to a second volume lower than the first volume based on identifying a second audio signal corresponding to the foreground object.

For example, the method may comprise, based on identifying motion of the wearable device using data of a sensor of the wearable device, moving the foreground object in the display. The method may comprise changing, by comparing the reference size range to a size that the moved foreground object is displayed in the display, a brightness of the background object.

For example, the method may comprise, in a state displaying a first portion of the background object adjacent to the foreground object with the first brightness, displaying a second portion of the background object distinguished by the first portion with a brightness greater than the first brightness.

For example, the method may comprise, in a state displaying the foreground object which is a first foreground object, reducing, based on identifying a second foreground object distinguished by the first foreground object, a brightness of the background object from the first brightness to the second brightness.

For example, the method may comprise, in a state changing a brightness of the background object, maintaining a brightness of the foreground object.

For example, the method may comprise, in a state changing a brightness of the background object to the second brightness smaller than the first brightness, reducing at least one of a density or a speed of a plurality of particles included in the background object.

For example, the method may comprise, in a state displaying the background object using a first chroma, changing, based on identifying that a size of the foreground object is expanded to be greater than the reference size range, a chroma of the background object to a second chroma smaller than the first chroma.

For example, the method may comprise, based on identifying that a size of the foreground object is reduced to be smaller than the reference size range, changing a brightness of the background object to a third brightness greater than the first brightness.

As described above, according to an embodiment, a wearable device may comprise a display, memory storing instructions, and a processor. The instructions, when executed by the processor, may cause the wearable device to display, on the display, a background object having a first brightness and one or more foreground objects superimposed on the background object. The instructions, when executed by the processor, may cause the wearable device to, in a state displaying the background object with the first brightness associated with a number of the one or more foreground objects, identify the number of the foreground objects based on at least one application executed by the processor. The instructions, when executed by the processor, may cause the wearable device to, based on identifying increasing of the number of the one or more foreground objects, change a brightness of the background object to a second brightness smaller than the first brightness. The instructions, when executed by the processor, may cause the wearable device to change a brightness of the background object to a third brightness greater than the first brightness, based on identifying that the number of the one or more foreground objects is reduced.

For example, the instructions, when executed by the processor, may cause the wearable device to display, based on a size of the one or more foreground objects displayed through the display, the background object using the first brightness selected among a plurality of preset brightnesses.

For example, the instructions, when executed by the processor, may cause the wearable device to maintain a brightness of the one or more foreground objects while changing the brightness of the background object.

For example, the instructions, when executed by the processor, may cause the wearable device to reduce a volume used to output an audio signal corresponding to the background object to a second volume lower than a first volume matching the first brightness.

For example, the instructions, when executed by the processor, may cause the wearable device to reduce the volume to a third volume lower than the second volume, based on identifying, from the one or more foreground objects, a second audio signal distinct from a first audio signal corresponding to the background object.

For example, the instructions, when executed by the processor, may cause the wearable device to change a brightness of the background object to a third brightness greater than the first brightness, based on identifying that the number of the one or more foreground objects is reduced.

As described above, according to an embodiment, a non-transitory computer readable storage medium storing instructions is provided. The instructions, when executed by a processor of a wearable device including a display, may cause the wearable device to display, overlappingly on a background object having a first brightness, a foreground object on the display. The instructions, when executed by the processor, may cause the wearable device to, based on identifying that a size of at least a portion of the display occupied by the foreground object has been increased, change a brightness of the background object from the first brightness to a second brightness smaller than the first brightness.

The device described above may be implemented as a hardware component, a software component, and/or a combination of a hardware component and a software component. For example, the devices and components described in the embodiments may be implemented by using one or more general purpose computers or special purpose computers, such as a processor, controller, arithmetic logic unit (ALU), digital signal processor, microcomputer, field programmable gate array (FPGA), programmable logic unit (PLU), microprocessor, or any other device capable of executing and responding to instructions. The processing device may perform an operating system (OS) and one or more software applications executed on the operating system. In addition, the processing device may access, store, manipulate, process, and generate data in response to the execution of the software. For convenience of understanding, there is a case that one processing device is described as being used, but a person who has ordinary knowledge in the relevant technical field may see that the processing device may include a plurality of processing elements and/or a plurality of types of processing elements. For example, the processing device may include a plurality of processors or one processor and one controller. In addition, another processing configuration, such as a parallel processor, is also possible.

The software may include a computer program, code, instruction, or a combination of one or more thereof, and may configure the processing device to operate as desired or may command the processing device independently or collectively. The software and/or data may be embodied in any type of machine, component, physical device, computer storage medium, or device, to be interpreted by the processing device or to provide commands or data to the processing device. The software may be distributed on network-connected computer systems and stored or executed in a distributed manner. The software and data may be stored in one or more computer-readable recording medium.

The method according to the embodiment may be implemented in the form of a program command that may be performed through various computer means and recorded on a computer-readable medium. In this case, the medium may continuously store a program executable by the computer or may temporarily store the program for execution or download. In addition, the medium may be various recording means or storage means in the form of a single or a combination of several hardware, but is not limited to a medium directly connected to a certain computer system, and may exist distributed on the network. Examples of media may include a magnetic medium such as a hard disk, floppy disk, and magnetic tape, optical recording medium such as a CD-ROM and DVD, magneto-optical medium, such as a floptical disk, and those configured to store program instructions, including ROM, RAM, flash memory, and the like. In addition, examples of other media may include recording media or storage media managed by app stores that distribute applications, sites that supply or distribute various software, servers, and the like.

As described above, although the embodiments have been described with limited examples and drawings, a person who has ordinary knowledge in the relevant technical field is capable of various modifications and transform from the above description. For example, even if the described technologies are performed in a different order from the described method, and/or the components of the described system, structure, device, circuit, and the like are coupled or combined in a different form from the described method, or replaced or substituted by other components or equivalents, appropriate a result may be achieved.

Therefore, other implementations, other embodiments, and those equivalent to the scope of the claims are in the scope of the claims described later.

## Claims

1. A wearable device comprising:
a display;
memory storing instructions; and
a processor, wherein the instructions, when executed by the processor, cause the wearable device to:
display, overlappingly on a background object having a first brightness, a foreground object on the display; and
based on identifying that a size of at least a portion of the display occupied by the foreground object has been increased, change a brightness of the background object from the first brightness to a second brightness smaller than the first brightness.

2. The wearable device of claim 1, further comprising a speaker, wherein the instructions, when executed by the processor, cause the wearable device to:
display the background object in the display by executing a process different from a process executed to display the foreground object, and output an audio signal of a first volume corresponding to the reference size range through the speaker.

3. The wearable device of claim 2, wherein the instructions, when executed by the processor, cause the wearable device to:
based on identifying that a size of the foreground object is expanded to be greater than the reference size range, change the first volume of the audio signal to a second volume smaller than the first volume; and
based on identifying that the size of the foreground object is reduced to be smaller than the reference size range, change the first volume of the audio signal to a third volume greater than the first volume.

4. The wearable device of claim 2, wherein the instructions, when executed by the processor, cause the wearable device to:
in response to an input to focus the foreground object in a state outputting the audio signal which is a first audio signal, change the first volume of the first audio signal to a second volume lower than the first volume based on identifying a second audio signal corresponding to the foreground object.

5. The wearable device of claim 4, wherein the instructions, when executed by the processor, cause the wearable device to:
while displaying the foreground object which is a widget which is executed by the processor to provide the second audio signal, receive the input to focus the foreground object.

6. The wearable device of claim 1, further comprising a sensor,
wherein the instructions, when executed by the processor, cause the wearable device to:
based on identifying motion of the wearable device using data of the sensor, move the foreground object in the display; and
change, by comparing the reference size range to a size that the moved foreground object is displayed in the display, a brightness of the background object.

7. The wearable device of claim 1, wherein the instructions, when executed by the processor, cause the wearable device to:
in a state displaying a first portion of the background object adjacent to the foreground object with the first brightness, display a second portion of the background object distinguished by the first portion with a brightness greater than the first brightness.

8. The wearable device of claim 1, wherein the instructions, when executed by the processor, cause the wearable device to:
in a state displaying the foreground object which is a first foreground object, reduce, based on identifying a second foreground object distinguished by the first foreground object, a brightness of the background object from the first brightness to the second brightness.

9. The wearable device of claim 1, wherein the instructions, when executed by the processor, cause the wearable device to:
in a state changing a brightness of the background object, maintain a brightness of the foreground object.

10. The wearable device of claim 1, wherein the instructions, when executed by the processor, cause the wearable device to:
in a state changing a brightness of the background object to the second brightness smaller than the first brightness, reduce at least one of a density or a speed of a plurality of particles included in the background object.

11. The wearable device of claim 1, wherein the instructions, when executed by the processor, cause the wearable device to:
in a state displaying the background object using a first chroma, change, based on identifying that a size of the foreground object is expanded to be greater than the reference size range, a chroma of the background object to a second chroma smaller than the first chroma.

12. The wearable device of claim 1, wherein the instructions, when executed by the processor, cause the wearable device to:
based on identifying that a size of the foreground object is reduced to be smaller than the reference size range, change a brightness of the background object to a third brightness greater than the first brightness.

13. A method of a wearable device, comprising:
displaying, on a display of the wearable device, a background object having a first brightness and one or more foreground objects superimposed on the background object;
in a state displaying the background object with the first brightness associated with a number of the one or more foreground objects, identifying the number of the foreground objects based on at least one application executed by a processor of the wearable device; and
based on identifying increasing of the number of the one or more foreground objects, changing a brightness of the background object to a second brightness smaller than the first brightness.

14. The method of claim 13, wherein the displaying comprising,
displaying, based on a size of the one or more foreground objects displayed through the display, the background object using the first brightness selected among a plurality of preset brightnesses.

15. A non-transitory computer readable storage medium storing instructions, wherein the instructions, when executed by a processor of a wearable device including a display, cause the wearable device to:
display, overlappingly on a background object having a first brightness, a foreground object on the display; and
based on identifying that a size of at least a portion of the display occupied by the foreground object has been increased, change a brightness of the background object from the first brightness to a second brightness smaller than the first brightness.
